(19) Europäisches Patentamt
European Patent Office
Office européen des brevets

(11) **EP 4 354 083 A1**

(12) **EUROPÄISCHE PATENTANMELDUNG**

(43) Veröffentlichungstag:
**17.04.2024   Patentblatt 2024/16**

(21) Anmeldenummer: 23202390.3

(22) Anmeldetag: **09.10.2023**

(51) Internationale Patentklassifikation (IPC):
*G01C 11/04* (2006.01)   *G06T 9/00* (2006.01)
*G06V 10/70* (2022.01)   *G06T 7/49* (2017.01)
*G06T 15/06* (2011.01)

(52) Gemeinsame Patentklassifikation (CPC):
**G01C 11/04; G06T 9/00; G06V 10/70**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **13.10.2022   DE 102022126640**

(71) Anmelder: **Dräger Safety AG & Co. KGaA
23560 Lübeck (DE)**

(72) Erfinder:
• **Günther, Martin
  235588 Lübeck (DE)**
• **Müller, Nikolas
  23558 Lübeck (DE)**

Bemerkungen:
Geänderte Patentansprüche gemäss Regel 137(2) EPÜ.

(54) **VERFAHREN UND VORRICHTUNG ZUR GENERIERUNG EINES RAUMPLANS VON EINER ETAGE EINES GEBÄUDES**

(57) Die Erfindung betrifft ein Verfahren und eine Anordnung, um automatisch einen Raumplan einer Etage eines Gebäudes zu generieren. Eine Menge von Voxeln in Form von Polyedern wird rechnerisch erzeugt und füllt zusammen die Ebene aus. Die Kanten des Polyeders sind parallel zu den Achsen eines vorgegebenen dreidimensionalen Koordinatensystems. Eine Kamera (IR) wird durch die Etage bewegt und erzeugt eine Abfolge von Bildern. Die jeweilige Position und Orientierung der Kamera (IR) beim Erzeugen eines Bilds werden gemessen. Charakteristische Schlüsselpunkte (S1', S2',...) werden ermittelt und im Koordinatensystem positioniert. Freie Voxel (Vx, Vy), also Voxel im Inneren eines Raums, werden ermittelt. Mindestens ein Cluster, bestehend aus einer topologisch zusammenhängenden Menge von freien Voxeln, wird generiert. Um jeden ermittelten Cluster herum wird ein umhüllender Körper gelegt. Jeder umhüllende Körper beschreibt jeweils die Begrenzungen (W, F) eines Raums (R.x) der Etage.

**FIG. 3**

EP 4 354 083 A1

**Beschreibung**

Die Erfindung betrifft ein Verfahren und eine Anordnung, um automatisch einen Raumplan einer Etage eines Gebäudes zu generieren. Ein Raumplan zeigt wenigstens näherungsweise die topologische Gestalt von Räumen der Etage an, idealerweise einschließlich Zwischendecken und Schrägen.

Die Aufgabe, einen solchen Raumplan zu generieren, tritt beispielsweise dann auf, wenn in einem Gebäude ein Brand ausgebrochen ist oder der Ausbruch eines Brands vermutet wird und daher die Etage oder das gesamte Gebäude verraucht ist oder sein kann und Feuerwehrleute oder andere Rettungskräfte das Gebäude nicht kennen. Trotzdem sollen die Rettungskräfte in die Lage versetzt werden, sich in der Etage zu orientieren. Insbesondere sollen die Rettungskräfte Menschen aus dem Gebäude retten und außerdem Brandnester löschen können. In vielen Fällen steht den Rettungskräften in einer solchen Situation kein früher generierter Grundriss oder sonstiger Raumplan der Etage zur Verfügung. Zudem kann ein vorhandener Raumplan veraltet sein.

Der Erfindung liegt die Aufgabe zugrunde, ein Verfahren und eine Anordnung bereitzustellen, um automatisch einen Raumplan einer Etage eines Gebäudes zu generieren, wobei das Verfahren und die Anordnung zuverlässiger sein sollen als bekannte Verfahren und Anordnungen.

Die Aufgabe wird durch ein Verfahren mit den Merkmalen des Anspruchs 1 und durch eine Anordnung mit den Merkmalen des Anspruchs 10 gelöst. Vorteilhafte Ausgestaltungen des erfindungsgemäßen Verfahrens sind, soweit sinnvoll, auch vorteilhafte Ausgestaltungen der erfindungsgemäßen Anordnung und umgekehrt.

Das erfindungsgemäße Verfahren und die erfindungsgemäße Anordnung vermögen automatisch einen Raumplan für eine Etage eines Gebäudes zu generieren. Das Verfahren und die Anordnung lassen sich auch dafür verwenden, jeweils einen Raumplan für mindestens zwei Etagen des Gebäudes zu generieren. Möglich ist auch, dass nur für einen Teil der Etage ein Raumplan erzeugt werden soll oder kann.

Der oder jeder zu generierende Raumplan umfasst einen Grundriss der Etage sowie für mehrere Bereiche der Etage die jeweilige Raumhöhe. In der Regel beschreibt der Raumplan die Etage nur näherungsweise und nicht exakt.

Die erfindungsgemäße Anordnung umfasst

- eine Kamera,
- einen Positionssensor und
- eine Signalverarbeitungseinheit.

Die Kamera ist dazu ausgestaltet, durch die oder jede Etage, von der ein Raumplan erzeugt werden soll, bewegt zu werden, beispielsweise indem die Kamera von einem Menschen oder einem autonomen Fahrzeug getragen wird. Während die Kamera durch die Etage bewegt wird, vermag sie eine Abfolge von Bildern zu erzeugen. Möglich ist, nacheinander oder gleichzeitig mehrere Kameras durch die Etage zu bewegen und Bilder von mindestens zwei dieser Kameras zu nutzen verwenden. Vereinfachend wird nachfolgend von "der Kamera" gesprochen.

Der Positionssensor vermag mindestens zu jedem Zeitpunkt, an dem die Kamera ein Bild erzeugt, jeweils ein Maß für die aktuelle Position und Orientierung der Kamera zu messen. Bevorzugt ist der Positionssensor - oder wenigstens ein Messwertaufnehmer des Positionssensors - mit der Kamera mechanisch fest verbunden. Bevorzugt lassen sich die Position und Orientierung des Positionssensors oder des fest verbundenen Messwertaufnehmers als die Position und Orientierung der Kamera verwenden.

Die erfindungsgemäße Anordnung kann als ein tragbares Gerät ausgestaltet sein, welches dazu ausgestaltet ist, durch die Etage getragen zu werden. Möglich ist auch, dass die Signalverarbeitungseinheit räumlich entfernt von der Kamera und dem Positionssensor angeordnet ist, insbesondere außerhalb der Etage, auf die sich der zu erzeugende Raumplan bezieht, optional sogar außerhalb des Gebäudes. In diesem Falle ist wenigstens zeitweise jeweils eine Datenverbindung, bevorzugt eine drahtlose Datenverbindung, zwischen der Kamera und dem Positionssensor einerseits und der Signalverarbeitungseinheit andererseits hergestellt. In beiden Ausgestaltungen vermag die Signalverarbeitungseinheit Signale von der Kamera und dem Positionssensor zu empfangen und automatisch zu verarbeiten.

Das erfindungsgemäße Verfahren wird unter Verwendung einer derartigen Anordnung durchgeführt.

Vorgegeben ist ein dreidimensionales Koordinatensystem mit drei Achsen. Bevorzugt stehen die drei Achsen senkrecht aufeinander. Besonders bevorzugt sind zwei Achsen waagerecht angeordnet und spannen eine waagerechte Ebene auf. In der Regel erstrecken sich die Böden und Decken im Gebäude parallel zu dieser waagerechten Ebene. Die dritte Achse ist senkrecht und steht senkrecht auf dieser aufgespannten Ebene. In der Regel erstrecken sich die Wände im Gebäude und damit in der Etage parallel zu dieser dritten Achse. Möglich ist auch, ein anderes ausgestaltetes oder anders positioniertes Koordinatensystem zu verwenden.

Das erfindungsgemäße Verfahren umfasst die folgenden automatisch durchgeführten Schritte, und die erfindungsgemäße Anordnung ist dazu ausgestaltet, automatisch die folgenden Schritte durchzuführen:

- Eine Menge von Voxeln wird erzeugt. Jedes Voxel ist ein Polyeder (Vielflach), insbesondere ein Quader. Die Kanten und damit auch die Flächen dieses Polyeders sind parallel zu den Achsen des dreidimensionalen Koordinatensystems ausgerichtet. Falls das Koordinatensystem ein kartesisches Koordinatensystem ist, d. h. falls die drei Achsen senkrecht aufeinander stehen, so ist jeder Polyeder ein Quader. Bevorzugt sind die Voxel disjunkt zueinander, d.h. sie überlappen sich überhaupt nicht oder nur in jeweils einer Seitenfläche. Die Voxel umschließen zusammen diejenige Etage, für die ein Raumplan erzeugt werden soll (füllen die Etage aus) - oder wenigstens einen Bereich der Etage, für den ein Raumplan erzeugt werden soll. Bevorzugt füllen die Voxel die Etage oder den Etagen-Bereich vollständig aus. Möglich ist, dass die Voxel zusammen mehrere Etagen umschließen, wobei für jede Etage jeweils einen Raumplan erzeugt werden soll. Die Menge der Voxel kann über die oder eine Etage überstehen.

- Die Kamera wird durch die Etage bewegt. Während des Vorgangs, dass die Kamera durch die Etage bewegt wird, erzeugt die Kamera eine Abfolge von Bildern. Jedes Bild dieser Abfolge zeigt einen Ausschnitt aus der Etage.

- Der Positionssensor misst für jedes Bild der Abfolge die jeweilige Position und die jeweilige Orientierung der Kamera, und zwar zu dem Zeitpunkt, an dem die Kamera das Bild erzeugt. Als Orientierung misst der Positionssensor insbesondere die Blickrichtung der Kamera. Bevorzugt wird jedes Bild der Abfolge zusammen mit einem Zeitstempel wenigstens zeitweise abgespeichert.

- Charakteristische Schlüsselpunkte in der Etage werden ermittelt. Jeder charakteristische Schlüsselpunkt liegt auf jeweils einer Wand der Etage. Selbstverständlich können mehrere Schlüsselpunkte auf derselben Wand liegen. Bevorzugt liegen wenigstens einige charakteristische Schlüsselpunkte auf jeweils einer Kante zwischen zwei Wänden, besonders bevorzugt auf eine Ecke zwischen drei Wänden. Um die charakteristischen Schlüsselpunkte zu ermitteln, werden die Bilder der Abfolge ausgewertet. Jeder ermittelte charakteristische Schlüsselpunkt wird in mindestens einem Bild der Abfolge gezeigt.

- Die charakteristischen Schlüsselpunkte werden wenigstens näherungsweise im dreidimensionalen Koordinatensystem rechnerisch positioniert. Um die Schlüsselpunkte zu positionieren, werden bevorzugt die jeweilige Position und / oder die jeweilige Orientierung der bewegten Kamera beim Erzeugen eines Bilds mit mindestens einem Schlüsselpunkt verwendet.

- Freie Voxel werden ermittelt. Ein freies Voxel gehört zu der Menge der erzeugten Voxel und hat die Eigenschaft, mindestens einmal, d.h. in mindestens einem Bild der Abfolge, zwischen der bewegten Kamera und mindestens einem Schlüsselpunkt zu liegen, ohne dass sich eine Wand oder ein anderer undurchsichtiger Gegenstand zwischen der Kamera und dem Voxel befindet. Der Schlüsselpunkt wird also in dem Bild der Kamera gezeigt. Eine Strecke von der Kamera zum Schlüsselpunkt läuft durch das Voxel. In der Regel liegt ein freies Voxel vollständig oder wenigstens mit mehr als der Hälfte seines Volumens im Inneren eines Raums der Etage.

- Um die freien Voxel zu ermitteln, werden die ermittelten Positionen der charakteristischen Schlüsselpunkte und die gemessenen Positionen und Orientierungen der bewegten Kamera im dreidimensionalen Koordinatensystem verwendet.

- Mindestens ein Cluster wird generiert. Der oder jeder generierte Cluster bildet eine topologisch zusammenhängende Menge von freien Voxeln, d.h. besteht aus einer solchen Menge. In einer topologisch zusammenhängenden Menge von freien Voxeln lässt sich stets ein Streckenzug auffinden, der von einem freien Voxel der Menge zu einem anderen freien Voxel der Menge führt und ausschließlich durch die Menge verläuft. Die Menge umfasst also nicht zwei räumlich voneinander getrennte Teilmengen. Jedes freie Voxel gehört zu höchstens einem Cluster. Möglich ist, dass ein freies Voxel zu gar keinem Cluster gehört. Ein Voxel im Inneren des Clusters ist stets ein freies Voxel. Ein Voxel am Rand des Clusters ist in einer Ausgestaltung ebenfalls stets ein freies Voxel und in einer anderen Ausgestaltung nicht notwendigerweise ein freies Voxel.

- Um jeden ermittelten Cluster herum wird jeweils ein umhüllender Körper gelegt, beispielsweise ein Quader oder sonstiger Polyeder. Der Cluster befindet sich im Inneren des umhüllenden Körpers, bevorzugt vollständig im Inneren. Bevorzugt durchdringen sich die umhüllenden Körper nicht. In einer Ausgestaltung wird jeder umhüllende Körper von senkrechten Seitenflächen begrenzt.

- Der Raumplan wird unter Verwendung der Cluster wie folgt erzeugt: Jeder Körper, der einen Cluster umhüllt, beschreibt die oder wenigstens einige Begrenzungen jeweils eines Raums der Etage, insbesondere die Wände, die Decke und den Boden des Raums. Der Cluster beschreibt näherungsweise das Innere des Raums selber.

Anmerkung: Die Voxel, Schlüsselpunkte und Cluster sind Objekte, die rechnerisch erzeugt und wenigstens zeitweise in einem Datenspeicher der Signalverarbeitungseinheit abgespeichert werden. Sie sind "virtuelle", aber keine physikalischen Objekte. Der Raumplan ist eine rechnerverfügbare Darstellung, die sich an eine Ausgabeeinheit übermitteln und visuell ausgeben lässt. Selbstverständlich ist es möglich, diesen Raumplan auszudrucken. Das Gebäude, die Kamera und der Positionssensor sind hingegen physikalische (anfassbare, "reale") Objekte.

Durch das erfindungsgemäße Verfahren und die erfindungsgemäße Anordnung wird automatisch ein Raumplan generiert. Hierfür werden lediglich die Bilder der Kamera sowie ein Signal des Positionssensors benötigt, aber nicht notwendigerweise ein Signal von einem weiteren Sensor. Die Bilder und das Positionssensor-Signal lassen sich erzeugen, während die Anordnung oder wenigstens die Kamera und ein Messwertaufnehmer des Positionssensors durch die Etage getragen werden, beispielsweise von einem Feuerwehrmann oder einer sonstigen Rettungskraft, während dieser Mensch durch die Etage geht. Sie können auch von einem autonomen Fahrzeug durch die Etage bewegt werden, beispielsweise von einer unbemannten Drohne. Dank der Erfindung ist es möglich, einen Raumplan von einer Etage eines unbekannten Gebäudes zu generieren, ohne dass spezielle Informationen über dieses Gebäude benötigt werden oder spezielle Annahmen zu treffen sind. Derartige spezielle Informationen liegen häufig nicht vor, wenn der Raumplan benötigt wird. Einzelne Annahmen können unzutreffend sein. Die Erfindung ermöglicht es hingegen, allgemeines Wissen zu verwenden, welches für die meisten Gebäude gilt, beispielsweise dass die Wände vertikal und die Böden und Decken horizontal angeordnet sind und die Räume daher in der Regel horizontale und vertikale Begrenzungsflächen aufweisen. Dank der Erfindung braucht hingegen insbesondere nicht vorausgesetzt zu werden, dass jeder Raum quaderförmig ist.

Während die Anordnung durch die Etage bewegt wird oder sich bewegt, kann es vorkommen, dass die Kamera mehrmals hintereinander Bilder erzeugt, die denselben Bereich eines Raums der Etage zeigen. Möglich ist, dass die Kamera zwischendurch andere Bilder erzeugt. Beispielsweise wird die Anordnung mit der Kamera erst in einen ersten Bereich verbracht, dann in einen anderen Bereich und dann wieder in den ersten Bereich. Dank der charakteristischen Schlüsselpunkte wird diese Situation in vielen Fällen erkannt. Denn wenigstens einige der charakteristischen Schlüsselpunkte unterscheiden sich von Bereich zu Bereich voneinander. Dank der charakteristischen Schlüsselpunkte lassen sich außerdem häufig stationäre Bestandteile in der Etage von Menschen oder sonstigen Lebewesen, die sich durch die Etage bewegen, unterscheiden.

Erfindungsgemäß wird ein Raum der Etage näherungsweise durch einen Cluster von topologisch zusammenhängenden Voxeln beschrieben. In der Regel gehören verschiedene Cluster zu unterschiedlichen Räumen. Die erfindungsgemäß erzeugten Cluster bilden die Räume eines realen Gebäudes relativ gut ab. Der umhüllende Körper um einen Cluster beschreibt häufig relativ gut die Wände, die Decke und den Boden, welche zusammen in diesem Raum begrenzen. Die vertikale Abmessung des umhüllenden Körpers liefert annähernd die Höhe des Raums.

Erfindungsgemäß bildet jeder generierte Cluster eine topologisch zusammenhängende Menge von freien Voxeln. Am Rand eines Clusters kann ein Voxel auftreten, welches kein freies Voxel ist, im Inneren des Clusters jedoch nicht. Möglich ist auch, dass ein Cluster ausschließlich aus freien Voxeln besteht. Das Merkmal, Cluster von freien Voxeln im Inneren zu bilden, hat folgenden Vorteil gegenüber der möglichen Vorgehensweise, Cluster von belegten Voxel zu bilden, also von Voxeln, die vollständig oder wenigstens teilweise zu jeweils einer Wand oder Decke oder Fußboden gehören: In der Regel wird nur ein geringer Teil der Etage von Wänden und Decken und Fußböden eingenommen und der Rest von freien Räumen. Ein Cluster aus belegten Voxeln hat daher in der Regel eine nur geringe horizontale Ausdehnung (Abmessung) senkrecht zu einer Wand oder Decke und besteht daher häufig aus Voxeln, die teilweise zu einer Wand und teilweise zu einem freien Raum der Etage gehören. Der Cluster mit belegten Voxel beschreibt daher in vielen Fällen eine Wand oder Decke oder Fußboden nur schlecht, insbesondere weil der Cluster eine stark gebogene oder gezackte oder gezähnte Begrenzungsfläche aufweist, während die Wand / die Decke / der Fußboden, die durch diese Begrenzungsfläche beschrieben wird, gerade ist. In manchen Fällen werden sich zwei Cluster von belegten Voxeln durchdringen, obwohl die betreffenden Wände sich in der Realität nicht durchdringen.

Erfindungsgemäß gehört jedes freie Voxel entweder zu genau einem Cluster oder zu gar keinem Cluster, aber nicht zu zwei Clustern. Das Innere eines Clusters besteht ausschließlich aus freien Voxeln. In einer Ausgestaltung kann am Rand eines Clusters ein belegtes Voxel auftreten. Dieses belegte Voxel liegt beispielsweise vollständig oder wenigstens teilweise in einer Wand oder Decke oder Boden eines Raums. Bevorzugt werden die Cluster so gebildet, dass auch ein belegtes Voxel zu höchstens einem Cluster gehört. Dadurch wird die Zuverlässigkeit erhöht, dass das Cluster das Innere eines Raums gut beschreibt.

Erfindungsgemäß wird mindestens ein Cluster generiert, der mindestens in seinem Inneren aus freien Voxeln besteht. Wenn die Generierung eines Clusters abgeschlossen ist, wird bevorzugt gezählt, wie viele freie Voxel, die noch keinem Cluster zugeordnet sind, es noch gibt. Falls die Anzahl noch verbleibender freier Voxel oberhalb einer vorgegebenen Schranke liegt, wird mit der Generierung eines neuen Clusters begonnen. Ansonsten wird die Generierung von Clustern beendet, und um jeden generierten Cluster wird so wie oben beschrieben jeweils ein umhüllender Körper gelegt. Ein Grund für die Beendigung der Cluster-Generierung: Die noch verbliebenen freien Voxel nehmen zusammen einen Raum ein, der vernachlässigbar klein ist.

In einer Ausgestaltung umfasst der Vorgang, einen Cluster zu generieren, die folgenden automatisch durchgeführten Schritte:

- Ein freies Voxel wird ausgewählt, wobei dieses freie Voxel noch nicht zu einem Cluster gehört. Das ausgewählte freie Voxel wird als erster Kandidat für einen neuen Cluster verwendet.
- Geprüft und entschieden wird, ob der erste Kandidat ein Kern-Voxel ist oder nicht. Was ein Kern-Voxel ist, wird weiter unten beschrieben.
- Falls der erste Kandidat ein Kern-Voxel ist, so ist er das erste Voxel des neuen Clusters.
- Mindestens einmal wird ein freies Voxel als weiterer Kandidat ausgewählt. Auch dieser weitere Kandidat gehörte bislang nicht zu einem Cluster.

4

- Geprüft und entschieden wird, ob der ausgewählte weitere Kandidat ein Kern-Voxel ist oder nicht.
- Die Generierung des Clusters wird beendet, wenn ein vorgegebenes Abbruchkriterium erfüllt ist. Das Abbruchkriterium ist insbesondere dann erfüllt, wenn feststeht, dass gemäß dieser Ausgestaltung dem Cluster kein weiteres Voxel hinzugefügt werden kann.

Der erste Kandidat und der oder jeder weitere Kandidat ist dann ein Kern-Voxel, wenn folgende Bedingungen erfüllt sind:

- Der Kandidat gehört zu einer topologisch zusammenhängenden Menge von Voxeln.
- Das Innere dieser Menge besteht ausschließlich aus freien Voxeln. Möglich ist, dass die gesamte Menge ausschließlich aus freien Voxeln besteht. Möglich ist auch, dass am Rand dieser Menge mindestens ein Voxel auftritt, welches kein freies Voxel ist. Die Menge ist also frei von Lücken und Löchern im Inneren. Eine Konsequenz: Die topologisch zusammenhängende Menge, wenigstens aber das Innere der topologisch zusammenhängenden Menge, befindet sich vollständig im Inneren eines einzigen Raums der Etage.
- Die Menge erfüllt ein Kriterium, welches von der Anzahl der Voxel in der Menge abhängt. Insbesondere ist das Kriterium erfüllt, wenn diese Voxel-Anzahl größer als oder gleich einer vorgegebenen unteren Schranke ist.

Bei der Prüfung, ob ein Kandidat ein Kern-Voxel ist oder nicht, wird die topologisch zusammenhängende Menge probeweise erzeugt, und zwar dergestalt, dass sie die oben genannten Bedingungen erfüllt. Die Menge wird so erzeugt, dass sich der Kandidat im Inneren dieser topologisch zusammenhängenden Menge befindet. Geprüft wird, ob diese probeweise erzeugte Menge das vorgegebene Kriterium erfüllt.

Dann, wenn der weitere Kandidat ein Kern-Voxel ist, wird folgender Schritt durchgeführt: Der Cluster wird um mindestens ein freies Voxel der topologisch zusammenhängenden Menge ergänzt, wobei diese Menge probeweise erzeugt wurde und der freie Voxel noch nicht zu einem Cluster gehört. Insbesondere wird der Cluster um den weiteren Kandidaten erweitert. Bevorzugt wird der Cluster um jedes freie Voxel der probeweise erzeugten topologisch zusammenhängenden Menge ergänzt. Möglich ist, dass ein freies Voxel dieser Menge bereits vorher zum Cluster gehört hat. Dann bleibt das freie Voxel im Cluster.

In einer Ausgestaltung wird der Cluster um jedes freie Voxel der probeweise erzeugten Menge ergänzt, welches noch nicht zu einem anderen Cluster gehört. In einer anderen Ausgestaltung wird der Cluster um jedes Voxel der topologisch zusammenhängenden Menge ergänzt, falls dieses Voxel noch nicht zu einem Cluster gehört, und zwar auch dann, wenn dieses Voxel kein freies Voxel ist. Auch bei dieser Ausgestaltung gehört jedes Voxel zu höchstens einem Cluster.

Ein weiteres Voxel der bislang erzeugten topologisch zusammenhängenden Menge wird als weiterer Kandidat ausgewählt. Bevorzugt wird dieses weitere Voxel als weiterer Kandidat ausgewählt, egal, ob der Kandidat als Kern-Voxel in der Menge klassifiziert wurde oder nicht. Bevorzugt gehört der ausgewählte weitere Kandidat bislang weder zu dem noch zu einem anderen Cluster.

Durch dieses bevorzugte Vorgehen wird der Cluster schrittweise erzeugt und in jedem Schritt ausgedehnt, und zwar so lange, bis der Cluster nicht mehr weiter ausgedehnt werden kann. In vielen Fällen füllt ein solcher Cluster einen großen Teil des Inneren eines Raums aus, ohne durch eine Wand oder einen Durchgang hindurch in einen anderen Raum hineinzureichen.

Das Abbruchkriterium ist spätestens dann erfüllt, wenn durch das oben beschriebene Vorgehen kein freies Voxel in der topologisch zusammenhängenden Menge als weiterer Kandidat ausgewählt werden kann, weil alle diese freien Voxel der Menge bereits zum Cluster gehören.

In einer Realisierungsform dieser bevorzugten Ausgestaltung werden bei der Prüfung, ob ein Kandidat ein Kern-Voxel ist oder nicht, folgende Schritte durchgeführt:

- Probeweise wird ein Polyeder um den Kandidaten gelegt. Dieser Polyeder besteht aus einer vorgegebenen Anzahl von aneinander angrenzenden Voxeln. Der Polyeder hat also für jeden Kandidaten die gleiche Größe und wird rechnerisch von Prüfung zu Prüfung verschoben. Bevorzugt hat der Polyeder die Form eines Quaders.
- Die Kanten des Polyeders sind parallel zu den Achsen des dreidimensionalen Koordinatensystems angeordnet. Der Kandidat liegt im Zentrum des Polyeders.
- Die topologisch zusammenhängende Menge wird dergestalt erzeugt, dass sie ausschließlich aus Voxeln des Polyeders besteht.

Die Realisierungsform mit dem Polyeder, bevorzugt dem Quader, berücksichtigt die Tatsache, dass die Wände, Böden und Decken in einem Gebäude in der Regel vertikal beziehungsweise horizontal angeordnet sind. Möglich ist aber auch, eine andere Anordnung von Wänden, Böden oder Decken zu berücksichtigen oder wenigstens eine Quaderform nicht vorauszusetzen. Bevorzugt hat auch jeder Polyeder Seitenflächen, die vertikal oder horizontal angeordnet sind, aber nicht schräg. Die Ausgestaltung mit dem Polyedern führt daher in vielen Fällen dazu, dass der Cluster einen Raum relativ gut ausfüllt. Die Seitenflächen des Clusters sind oft weniger stark gezackt und gewölbt, als dies bei anderen möglichen Ausgestaltungen der Fall sein kann.

Bei der folgenden Realisierungsform wird ein kartesisches Koordinatensystem vorgegeben, und der probeweise positionierte Polyeder ist ein Quader. Die vertikale Abmessung des Quaders lässt sich abhängig von der typischen vertikalen Abmessung einer Decke eines Gebäudes, also der Dicke einer Decke, vorgeben. Einerseits sollte die vertikale Abmessung nicht zu groß sein. Dadurch steht der Quader nicht wesentlich in zwei Richtungen über eine Decke über. Damit in vielen Fällen ein Raum von einem Cluster und nicht von zwei verschiedenen Clustern ausgefüllt wird und damit die Rechenzeit nicht zu lang wird, sollte die vertikale Abmessung nicht zu klein sein. Die Erfinder haben in internen Versuchen herausgefunden, dass die vertikale Abmessung eines Quaders bevorzugt zwischen 60 cm und 90 cm liegt und dass der Quader bevorzugt jeweils drei übereinanderliegende Voxel umfasst.

Die nachfolgend beschriebene Fortbildung der gerade beschriebenen Ausgestaltung führt in vielen Fällen dazu, dass die vertikalen Begrenzungsflächen eines Clusters weniger stark gezackt und gewölbt sind, als dies bei möglichen anderen Ausgestaltungen der Fall ist.

Auch die Fortbildung legt fest, wie geprüft wird, ob ein Kandidat ein Kern-Voxel ist oder nicht. Die Fortbildung umfasst die folgenden Schritte:

- Durch eine vertikale Projektion wird der Polyeder mit dem Kandidaten im Zentrum auf eine horizontale Ebene projiziert. Durch diese Projektion werden alle übereinander liegenden Voxel des Polyeders auf jeweils dasselbe n-Eck projiziert. Durch die Projektion wird also der Polyeder auf ein Gesamt-n-Eck projiziert, wobei dieses Gesamt-n-Eck aus einzelnen n-Ecken besteht und jedes einzelne n-Eck die Projektion der übereinanderliegenden Voxel auf die Ebene ist. Das gesamte n-Eck kann mehr Ecken haben als mindestens ein einzelnes n Eck. Der Kandidat wird auf ein einzelnes n-Eck im Zentrum des Gesamt-Rechtecks projiziert.
- Bevorzugt wird ein kartesisches Koordinatensystem vorgegeben, und die Polyeder sind daher Quader. Die Projektion liefert dann Rechtecke als n-Ecke.
- Ein einzelnes n-Eck entsteht dadurch, dass mehrere übereinander liegende Voxel des Polyeders auf dieses einzelne n-Eck projiziert werden. Jedes dieser übereinanderliegenden Voxel ist entweder ein freies Voxel oder ein anderes Voxel. Abhängig davon, wie viele der übereinanderliegenden Voxel freie Voxel sind, wird ein einzelnes n-Eck als freies n-Eck oder als ein anderes n-Eck klassifiziert.
- Probeweise wird eine topologisch zusammenhängende Menge erzeugt. Gemäß der Fortbildung besteht diese probeweise erzeugte topologisch zusammenhängende Menge nicht aus Voxeln, sondern aus einzelnen n-Ecken des Gesamt-n-Ecks.
- Geprüft wird, ob die topologisch zusammenhängende Menge von einzelnen n-Ecken ein vorgegebenes Kriterium erfüllt. Dieses Kriterium hängt von der Anzahl der einzelnen n-Ecken der Menge ab. Das Kriterium ist insbesondere dann erfüllt, wenn die Anzahl der einzelnen n-Ecken größer als oder gleich einer vorgegebenen Mindestanzahl ist. Falls das Kriterium erfüllt ist, ist der Kandidat ein Kern-Voxel, ansonsten nicht.

Die gerade beschriebenen Ausgestaltungen sehen vor, dass probeweise eine topologisch zusammenhängende Menge von Voxeln oder einzelnen n-Ecken erzeugt wird. Bevorzugt wird diese topologisch zusammenhängende Menge schrittweise erzeugt, und zwar ausgehend von dem Kandidaten oder von der Projektion des Kandidaten in die horizontale Ebene. Beim schrittweisen Vorgehen wird die Menge in jedem Schritt um jeweils ein Voxel bzw. ein einzelnes n-Eck erweitert, wobei die Erweiterung in eine Richtung abgebrochen wird, wenn ein Voxel erreicht wird, welches kein freies Voxel ist. Dieses erreichte Voxel liegt am Rand oder bereits außerhalb der Menge.

Erfindungsgemäß werden Cluster bestehend aus freien Voxeln erzeugt. Ein freies Voxel liegt mindestens einmal zwischen der Kamera und einem Schlüsselpunkt, ohne dass sich eine Wand oder ein sonstiger undurchsichtiger Gegenstand zwischen der Kamera und dem Voxel befindet. Um freie Voxel zu ermitteln, wird bevorzugt für jedes Bild, welches von der Kamera erzeugt wurde und mindestens einen Schlüsselpunkt zeigt, die jeweilige Position und Orientierung der Kamera im Moment der Bildaufnahme verwendet. Diese Position und Orientierung wird vom Positionssensor gemessen.

Eine bevorzugte Ausgestaltung legt ein Vorgehen fest, um automatisch zu entscheiden, ob ein Voxel ein freies Voxel ist oder nicht. Gemäß dieser Ausgestaltung wird jede Strecke ermittelt, welche von der Kamera zu einem Schlüsselpunkt reicht und durch das Voxel verläuft. Möglich ist, dass die Kamera nacheinander aus verschiedenen Positionen und / oder Orientierungen jeweils mindestens ein Bild erzeugt, wobei jedes dieser Bilder denselben Schlüsselpunkt zeigt und jeweils eine Strecke pro Bild von der Kamera zu dem Schlüsselpunkt verläuft und durch das Voxel geht. Möglich ist auch, dass überhaupt keine Strecke von der Kamera zu einem Schlüsselpunkt durch das Voxel verläuft.

Falls durch das Voxel überhaupt keine Strecke von der Kamera zu einem Schlüsselpunkt verläuft - allgemein: weniger als eine vorgegebene Mindestanzahl von Strecken - so wird das Voxel als nicht klassifizierbar eingestuft. Falls mindestens eine Strecke - allgemein: mindestens die vorgegebene Mindestanzahl von Strecken - durch das Voxel verläuft, so wird eine Bewertung für das Voxel generiert. Ein freies Voxel befindet sich im Inneren eines Raums, ein belegtes Voxel überschneidet sich wenigstens teilweise mit einer Wand oder Decke oder Boden.

Abhängig von der Bewertung wird das Voxel als ein freies Voxel oder als ein belegtes Voxel klassifiziert. Die Bewertung hängt von der oder jeder Strecke ab, die durch das Voxel verläuft. Die Bewertung kann von der Anzahl der Strecken, die durch das Voxel verlaufen, abhängen. Die Bewertung kann auch davon abhängen, ob ein Schlüsselpunkt im Voxel liegt oder nicht. Bevorzugt hängt die Bewertung von der jeweiligen Position eines Segments der Strecke relativ zum Mittelpunkt des Voxels ab, wobei dieses Segment durch das Voxel verläuft. Falls mindestens eine Strecke durch den Mittelpunkt oder ausreichend nahe dem Mittelpunkt verläuft, so ist das Voxel mit hoher Sicherheit (mit einer Sicherheit oberhalb einer vorgegebenen Schranke) ein freies Voxel. Falls alle Strecken nur einen Randbereich des Voxels schneiden, so kann das Voxel sich teilweise in einer Wand befinden.

Die Bewertung ist beispielsweise eine Zahl zwischen 0 und 1 (einschließlich). Eine Bewertung von 0 bedeutet, dass das Voxel mit Sicherheit ein freies Voxel ist, eine Bewertung von 1, dass das Voxel mit Sicherheit ein belegtes Voxel ist.

Das gerade beschriebene Vorgehen führt dazu, dass mit relativ hoher Zuverlässigkeit ein erfindungsgemäß erzeugtes Cluster mit freien Voxeln mit guter Näherung das Innere eines einzigen Raumes beschreibt.

Erfindungsgemäß werden charakteristische Schlüsselpunkte ermittelt und wenigstens näherungsweise im dreidimensionalen Koordinatensystem positioniert. Weiter oben wurde eine Ausgestaltung beschrieben, um automatisch zu entscheiden, ob ein Voxel ein freies Voxel ist oder nicht. Diese Ausgestaltung beruht darauf, dass jede Strecke ermittelt wird, die von der Kamera durch das Voxel hindurch zu einem charakteristischen Schlüsselpunkt verläuft. Idealerweise liegt jeder ermittelte Schlüsselpunkt auf einer Wand des Gebäudes. Anmerkung: Die Positionen der Wände im Koordinatensystem sind in der Regel vorab nicht bekannt. In der Praxis kann ein charakteristischer Schlüsselpunkt aber - gesehen von der Kamera her - vor oder auch hinter einer Wand liegen. Das gerade beschriebene Vorgehen oder auch ein anderes mögliches Vorgehen, um freie Voxel zu ermitteln, kann falsche Ergebnisse liefern, nämlich wenn ein Schlüsselpunkt dergestalt im Koordinatensystem positioniert wird, dass der Schlüsselpunkt hinter einer Wand liegt. Dies könnte nämlich zu einem Cluster führen, der mit einer Wand überlappt oder sogar die Wand vollständig durchdringt. Das wiederum kann zu einem falschen Raumplan führen. Falls hingegen der Cluster nur teilweise das Innere eines Raums ausfüllt, so ist der Fehler geringer. Die nachfolgend beschriebene Ausgetaltung reduziert dieses Problem.

Jeder Schlüsselpunkt hat jeweils eine initiale Position im dreidimensionalen Koordinatensystem. Diese initiale Position wird bevorzugt abhängig von den Bildern der Kamera und dem Signal des Positionssensors ermittelt. Bevorzugt wird mindestens ein Schlüsselpunkt ausgehend von seiner initialen Position rechnerisch auf die Kamera zu bewegt, bevor der Schlüsselpunkt endgültig im dreidimensionalen Koordinatensystem positioniert wird. Verwendet werden hierfür die Bilder, die diesen Schlüsselpunkt zeigen. Als die Kamera diese Bilder erzeugt hatte, hatte die Kamera jeweils eine Position und Orientierung im dreidimensionalen Koordinatensystem. Die Strecke, über die ein Schlüsselpunkt von der initialen zu der endgültigen Position im Koordinatensystem und hierbei auf die Kamera zu bewegt wird, hängt bevorzugt von der jeweiligen Entfernung zu mindestens einem im Bild benachbarten Schlüsselpunkt ab, besonders bevorzugt von den Entfernungen zu n benachbarten Schlüsselpunkten, wobei $n >= 1$ eine vorgegebene Anzahl ist. Je kleiner diese Entfernungen sind, desto größer ist die Sicherheit, dass der Schlüsselpunkt tatsächlich auf einer Wand liegt, und desto geringer ist die Entfernung, über die der Schlüsselpunkt rechnerisch bewegt wird. Ein Grund: In der Regel ein Schlüsselpunkt in der Nähe einer Wand, auch wenn seine Position nicht korrekt detektiert worden ist.

Ein erfindungsgemäß erzeugter Cluster beschreibt näherungsweise das Innere eines Raums. Um diesen Cluster wird ein umhüllender Körper gelegt. Dieser umhüllende Körper beschreibt näherungsweise die Begrenzungen des Raums, insbesondere die Wände. Eine Schnittfläche dieses umhüllenden Körpers mit einer horizontalen Ebene liefert eine Beschreibung des Raums in einem zweidimensionalen Grundriss der Etage.

In vielen Fällen, aber nicht immer, hat ein Raum die Form eines Quaders. Dies wird aber nicht vorausgesetzt. In einer Ausgestaltung wird daher als umhüllende Körper ein Quader um einen ermittelten Cluster gelegt. Dieser Quader ist parallel zu den Achsen des dreidimensionalen kartesischen Koordinatensystems ausgerichtet, hat also bevorzugt waagerechte und senkrechte Begrenzungsflächen. Der Quader umhüllt den Cluster vollständig. Bevorzugt weist der Quader die kleinstmöglichen Abmessungen auf, die ein vollständig umhüllender Quader aufweisen kann. Ermittelt werden das Volumen des Clusters und das Volumen des umhüllenden Quaders. Das Volumen des Clusters ist kleiner als oder genauso groß wie das Volumen des umhüllenden Quaders. Berechnet wird das Verhältnis, also der Quotient, aus Cluster-Volumen und Quader-Volumen. Wenn dieses Verhältnis größer als oder gleich einer vorgegebenen Anteils-Schranke ist, wird der umhüllende Quader als der umhüllende Körper verwendet. In diesem Fall hat nämlich der Cluster annähernd die Form eines Quaders. Anstelle eines Quaders kann auch ein anders geformtes Polyeder um den ermittelten Cluster gelegt werden.

Bevorzugt ist oder umfasst die Kamera eine Infrarotkamera, die Bilder mit Temperaturwerten aus einem Infrarotspektrum zu erzeugen vermag, besonders bevorzugt aus einem Spektrum zwischen 3 $\mu$m und 15 $\mu$m. Bei dieser Ausgestaltung liefert die Kamera auch dann noch auswertbare Bilder, wenn Rauch oder Staub in der Etage vorhanden sind, was häufig bei oder nach einem Brand der Fall ist.

Verschiedene Realisierungsformen für den Positionssensor sind möglich. In einer Realisierungsform umfasst der Positionssensor einen Geopositionssensor, der beispielsweise einen GPS-Empfänger umfasst. Jedoch vermag ein Geopositionssensor oft nicht die Höhe über Grund zu messen. In einer anderen Realisierungsform umfasst der Positionssensor einen Bewegungssensor, der seine eigene aktuelle lineare Bewegung, bevorzugt seine lineare Beschleunigung, sowie seine eigene aktuelle Winkelbewegung, bevorzugt seine aktuelle Winkelbeschleunigung, zu messen vermag. Ein derartiger Bewegungssensor kann als ein inertialer Sensor realisiert sein. Der Positionssensor kann sowohl einen Geopositionssensor als auch einen Bewegungssensor umfassen.

Die Signalverarbeitungseinheit wertet das Signal des Bewegungssensors aus, um eine Trajektorie der Kamera durch die Etage zu generieren. Bevorzugt wird aufgrund des Signals des Bewegungssensors eine initiale Trajektorie generiert. Diese initiale Trajektorie wird mithilfe von charakteristischen Schlüsselpunkten korrigiert. Hierbei wird insbesondere ein charakteristischer Schlüsselpunkt in unterschiedlichen Bildern der Kamera wiedererkannt. Bevorzugt wird außerdem die initiale Trajektorie durch Ausnutzung der Tatsache korrigiert, dass der Boden der Etage in der Regel eine ebene Fläche ist oder aus mehreren ebenen Flächen besteht und sich daher auch die Trajektorie im Wesentlichen in einer Ebene erstreckt. Die jeweilige Position und Orientierung der Kamera zum Zeitpunkt einer Bildaufnahme werden mithilfe dieser Trajektorie ermittelt. Der Begriff "Positionssensor" umfasst auch diese Realisierungsform. Bevorzugt umfasst die Trajektorie für jedes Bild, welches die Kamera erzeugt hat, jeweils eine Kennzeichnung des Zeitpunkts, an dem die Kamera das Bild erzeugt hat.

Im Folgenden wird die Erfindung anhand eines Ausführungsbeispiels beschrieben. Hierbei zeigt

Figur 1     einen Grundriss einer Etage eines Gebäudes, wobei dieser Grundriss vorab und ohne Verwendung der Erfindung erzeugt wurde;

Figur 2     in einer Draufsicht, wie Schlüsselpunkte rechnerisch auf die Kamera zu verschoben werden;

Figur 3     freie Voxel in der Situation von Figur 2;

Figur 4     in einer Draufsicht ein Kernel um einen Kandidaten und wie Voxel des Kernels projiziert und klassifiziert werden;

Figur 5     wie ausgehend von einem Kern-Voxel ein Cluster aufgefunden wird;

Figur 6     zwei Kern-Voxel und zwei Kernel um diese Kern-Voxel in der Situation von Figur 2 sowie zwei Cluster;

Figur 7     die beiden erzeugten Cluster von Figur 6;

Figur 8     die beiden Cluster von Figur 7 sowie zur Veranschaulichung die Kamera und die Wand von Figur 2;

Figur 9     zwei Quader um die beiden Cluster von Figur 7;

Figur 10    eine Trajektorie durch die Räume von Figur 1 ;

Figur 11    einen erfindungsgemäß generierten Raumplan mit den Umrissen der Räume.

Die Erfindung wird beispielsweise dann verwendet, wenn in einem Gebäude ein Feuer ausgebrochen ist oder wenn vermutet wird, dass ein Feuer ausgebrochen ist. Ein sogenannter Angriffstrupp mit mehreren Feuerwehrleuten begibt sich in das brennende Gebäude und durchquert es, insbesondere um in dem Gebäude nach Menschen zu suchen und um sie zu retten, sowie auch, um Brandherde zu löschen.

In der Regel kennen die Feuerwehrleute das Innere des Gebäudes nicht. Um ihnen die Orientierung zu erleichtern, ist es von Vorteil, ihnen einen sogenannten Raumplan (eine Raumkarte) zur Verfügung zu stellen. Dieser Raumplan zeigt idealerweise den Grundriss sowie Schrägen und Zwischendecken und / oder die Raumhöhe in Räumen an. Häufig zeigt der Grundriss zusätzlich größere Gegenstände in den Räumen. Weil ein solcher Raumplan bei einem Einsatz in der Regel nicht zur Verfügung steht, wird er automatisch generiert, wofür die Erfindung verwendet wird.

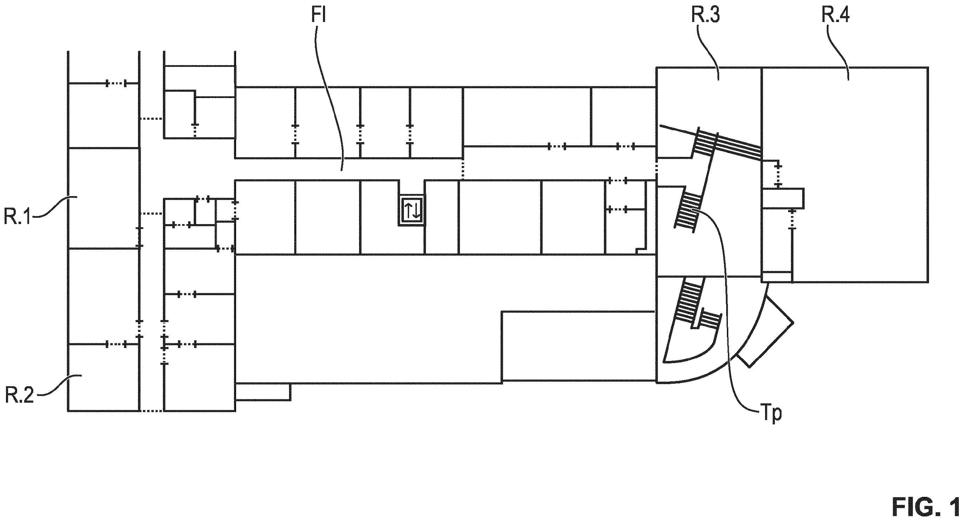

Figur 1 zeigt beispielhaft einen Grundriss einer Etage eines Gebäudes, wobei dieser Grundriss vorab und ohne Verwendung der Erfindung erzeugt wurde. Zu sehen sind ein Flur Fl, mehrere Räume R.1, R.2, ... sowie mehrere Treppen, darunter die Treppe Tp.

Jeder Feuerwehrmann trägt eine Schutzausrüstung. Mindestens ein Feuerwehrmann führt an seiner Schutzausrüstung mit sich:

- eine Infrarotkamera (Wärmebildkamera) IR,
- eine inertiale Sensoreinheit IMS,
- bevorzugt eine nur schematisch gezeigte Signalverarbeitungseinheit SP, welche das erfindungsgemäße Verfahren ausführt, sowie
- optional eine Infrarot-Lichtquelle und
- optional eine Kamera für Bilder im sichtbaren Wellenlängenbereich.

Die Infrarotkamera IR vermag Bilder mit Temperaturwerten aus einem Infrarotspektrum, bevorzugt zwischen 3 $\mu$m und 15 $\mu$m, zu erzeugen. Die optionale Infrarot-Lichtquelle umfasst in einer Realisierungsform einen $CO_2$-Laser, der beispielsweise Licht im Wellenlängenbereich von 10,6 $\mu$m abstrahlt.

Der wesentliche Grund dafür, eine Infrarotkamera IR und optional eine Infrarot-Lichtquelle zu verwenden, ist der folgende: Wenn das Gebäude verqualmt und / oder verraucht ist, liefern Kameras, die Bilder im sichtbaren Bereich (zwischen 350 nm und 750 nm) erzeugen, häufig keine brauchbaren Ergebnisse. Typischerweise haben die Partikel in einem verqualmten oder verrauchten Raum einen Durchmesser zwischen 1 $\mu$m und 10 $\mu$m. Daher wird mindestens eine Infrarotkamera IR verwendet, insbesondere eine Wärmebildkamera. Die oder jede verwendete Infrarotkamera IR erzeugt Bilder in einem Wellenlängenbereich oberhalb von 3 $\mu$m, bevorzugt oberhalb von 7 $\mu$m.

Die inertiale Sensoreinheit IMS umfasst bevorzugt einen Beschleunigungssensor, der die jeweilige lineare Beschleunigung in die drei Richtungen eines orthogonalen (kartesischen) Koordinatensystems misst, sowie einen Drehratensensor (Gyrometer), der die drei Rotationsgeschwindigkeiten oder Winkelbeschleunigungen in diesem orthogonalen Koordinatensystem misst. In einer Realisierung umfasst die inertiale Sensoreinheit IMS zusätzlich ein Magnetometer, also einen Sensor, welcher in die drei Richtungen des Koordinatensystems die jeweilige Stärke des von der Erde verursachten Magnetfelds misst. Die inertiale Sensoreinheit IMS fungiert im Ausführungsbeispiel als der Messwertaufnehmer des Positionssensors.

Der Feuerwehrmann mit der Infrarotkamera IR geht durch das Gebäude. Hierbei erzeugt die Infrarotkamera IR laufend Bilder, bevorzugt mit einer festen AbtastFrequenz. In einer Ausgestaltung beleuchtet die Infrarot-Lichtquelle das Blickfeld der Infrarotkamera IR. Die inertiale Sensoreinheit IMS des Feuerwehrmanns erfasst die Bewegung des Feuerwehrmanns und damit die Bewegung der Infrarotkamera IR, wenn der Feuerwehrmann die Infrarotkamera IR durch das Gebäude bewegt. Das Signal der inertialen Sensoreinheit IMS sowie die Infrarotbilder liefern zusammen eine Trajektorie, welche die Bewegung der Infrarotkamera IR durch das Gebäude beschreibt. Der Vorgang, eine Trajektorie eines im Raum bewegten Systems zu generieren, ist unter der Bezeichnung "Visuell-Inertiale Odometrie" bekannt geworden, aber nicht für die hier beschriebene Anwendung.

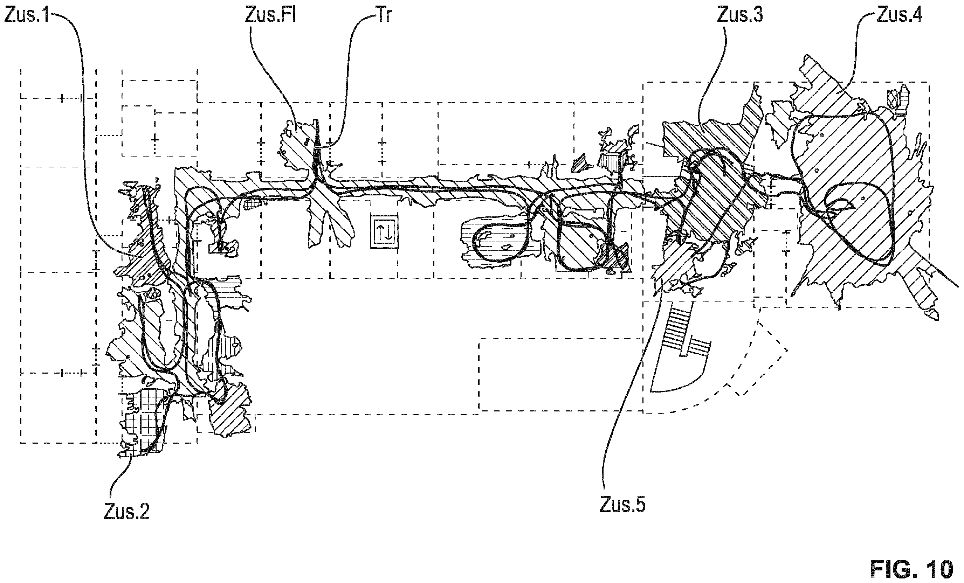

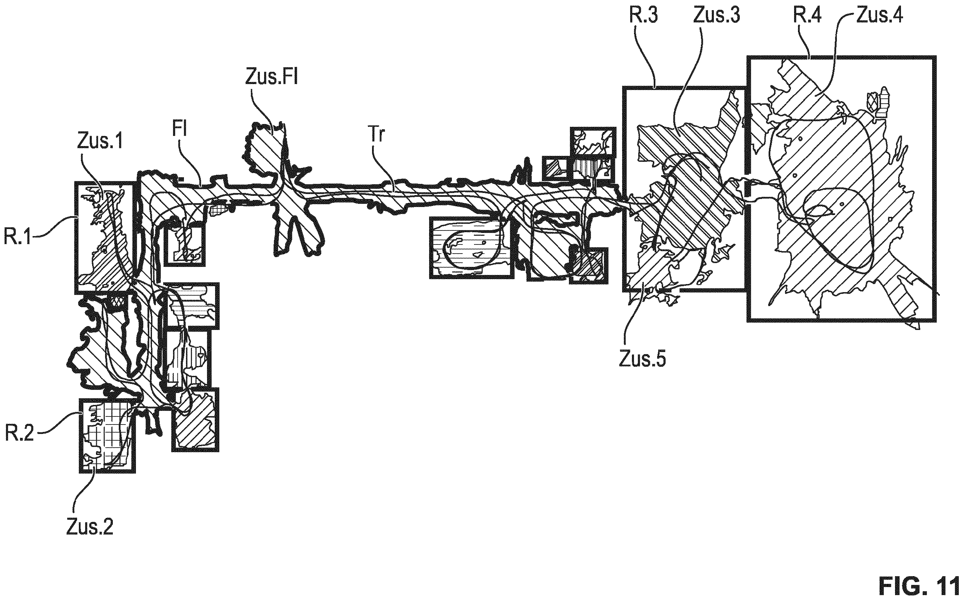

Figur 10 und Figur 11 zeigen beispielhaft eine Trajektorie Tr durch die Etage, die in Figur 1 gezeigt wird. Diese Trajektorie Tr wurde automatisch unter Verwendung eines Signals der inertialen Sensoreinheit IMS generiert. Die übrigen Bestandteile von Figur 10 und Figur 11 werden weiter unten erläutert.

Vorgegeben wird ein ortsfestes dreidimensionales Koordinatensystem. Die x-Achse und die y-Achse sind waagerecht angeordnet, die z-Achse vertikal. Die Trajektorie Tr wird in diesem Koordinatensystem positioniert.

Möglich ist, dass der Feuerwehrmann mit der Infrarotkamera IR mehrmals durch denselben Raum des Gebäudes geht. Daher ist es auch möglich, dass mehrere Bilder der Infrarotkamera IR denselben Bereich desselben Raums zeigen, häufig aus verschiedenen Blickrichtungen. Um dies zu erkennen, wird automatisch in den Infrarotbildern nach charakteristischen visuellen Merkmalen gesucht. Solche charakteristischen Merkmale werden auch als "Landmarken" ("landmarks") bezeichnet. Ein charakteristisches Merkmal bezieht sich in der Regel auf einen Punkt in dem Gebäude, ist durch seine Umgebung definiert und wird dann als "Schlüsselpunkt" bezeichnet. Ein charakteristisches Merkmal in einem Bild und damit auch in einem Infrarotbild ist allgemein ein Bereich des Bildes mit charakteristischen Eigenschaften. Ein Beispiel für ein charakteristisches Merkmal eines Bildes ist ein Bildbereich, der den Schnitt von mindestens zwei Kanten eines Raums des Gebäudes zeigt, also einen Eckpunkt in dem Raum. Bevorzugt wird der Eckpunkt als ein charakteristisches Merkmal behandelt. Ein charakteristisches Merkmal, insbesondere das Abbild eines Eckpunkts, hat die Eigenschaft, dass das charakteristische Merkmal sich mit relativ großer Sicherheit automatisch in verschiedenen Bildern wiedererkennen lässt, auch wenn diese Bilder das charakteristische Merkmal aus unterschiedlichen Blickrichtungen und / oder aus unterschiedlichen Entfernungen und daher mit unterschiedlichen Abbildungsmaßstäben zeigen. In vielen Fällen ist ein Verfahren auf Basis von solchen charakteristischen Merkmalen, insbesondere von Eckpunkten, robust gegen Rotationen und Translationen.

Häufig ist ein charakteristisches Merkmal in mindestens einem Bild ein Abbild eines charakteristischen Schlüsselpunkts. Auch die detektierten Schlüsselpunkte werden in zweidimensionalen Bildern erkannt und in dem oben beschriebenen dreidimensionalen Koordinatensystem positioniert, insbesondere projiziert. Um einen Schlüsselpunkt in das dreidimensionale Koordinatensystem zu positionieren, werden die Position und die Orientierung verwendet, welche die Kamera IR zum Zeitpunkt der Aufnahme desjenigen Bildes aufweist, das den Schlüsselpunkt zeigt.

Anmerkung: Die Bilder der Kamera sind bekanntlich zweidimensionale Objekte und zeigen charakteristische Bildmerkmale. Ein charakteristisches Bildmerkmal kann ein Schlüsselpunkt im Gebäude sein, beispielsweise eine Ecke, in der drei Wände aneinanderstoßen, oder auch nur die Ecke einer andersfarbigen Fläche auf einer Wand, z.B. eines Gemäldes oder Posters. Bevorzugt werden verschiedene Bilder, in denen dasselbe charakteristische Bildmerkmal gezeigt wird, miteinander verglichen, um automatisch zu entscheiden, ob dieses charakteristische Bildmerkmal einen charakteristischen Schlüsselpunkt im Gebäude zeigt oder etwas anderes.

Um Eckpunkte und sonstige Schlüsselpunkte zu detektieren, wird in einer Realisierungsform das Verfahren angewendet, welches in J. Shi & C. Tomasi: "Good Features to Track", IEEE 19/94, pp. 1063-1069, beschrieben ist.

Bevorzugt wird das Signal von der inertialen Sensoreinheit IMS ausgewertet, um eine initiale Trajektorie zu generieren. Diese initiale Trajektorie wird mithilfe von charakteristischen Schlüsselpunkten korrigiert. Hier wird geprüft, ob derselbe charakteristische Schlüsselpunkt in unterschiedlichen Bildern der Kamera IR vorkommt, und dieses Ereignis wird verwendet, um die initiale Trajektorie zu korrigieren.

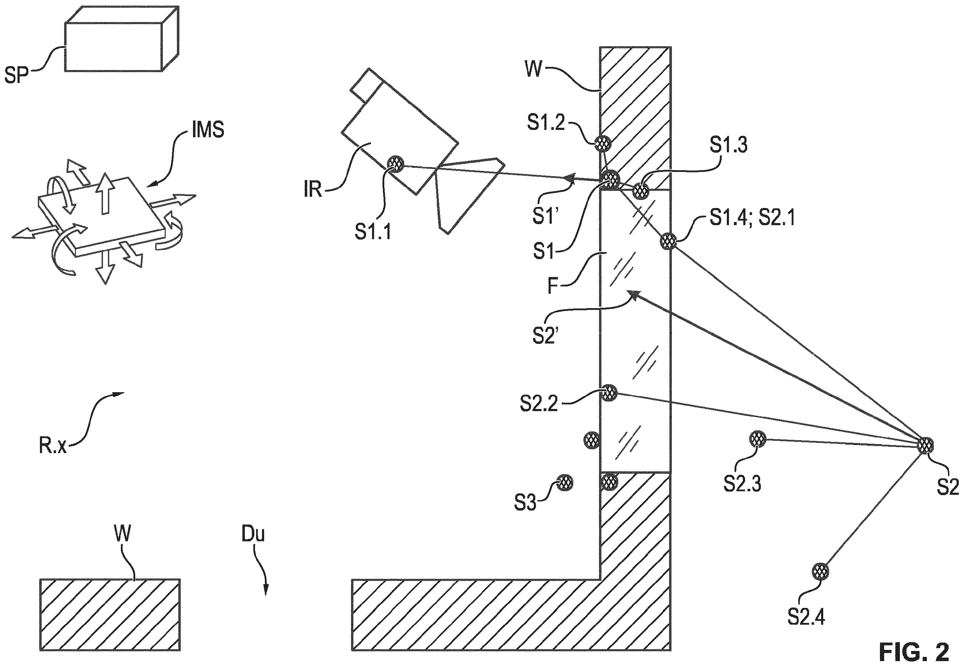

Figur 2 zeigt beispielhaft in einer Draufsicht eine Wand W eines Raums R.x, wobei in die Wand W ein Fenster F und ein Durchgang Du eingelassen sind. Außerdem zeigt Figur 2 die Infrarotkamera IR in diesem Raum R.x. Die Position und die Orientierung der Infrarotkamera IR zu einem bestimmten Zeitpunkt wird durch eine sogenannte 6D-Pose beschrieben. Bevorzugt wird die Annahme verwendet, dass die gemessene 6D-Pose mit der tatsächlichen Position und Orientierung der Infrarotkamera IR übereinstimmt. Drei Komponenten dieser 6D-Pose beschreiben die Position, drei weitere Komponenten die Orientierung in dem dreidimensionalen Koordinatensystem. Bevorzugt lässt sich eine 6D-Pose als ein Element einer Lie-Gruppe SE(3) beschreiben.

Detektiert wurden mehrere Schlüsselpunkte S1, S1.1, ..., S2, S2.1, S3, ... Idealerweise liegen alle Schlüsselpunkte auf jeweils einer Wand W des Raums. Zu sehen ist, dass einzelne Schlüsselpunkte hingegen vor der Wand W oder außerhalb des Raums liegen, z.B. der Schlüsselpunkt S2. Dieses unerwünschte Ereignis tritt insbesondere an dem Fenster F auf.

Um diesen Effekt rechnerisch wenigstens näherungsweise zu kompensieren, werden bevorzugt Schlüsselpunkte rechnerisch näher zur Infrarotkamera IR gerückt. Dies wird beispielhaft für die beiden Schlüsselpunkte S1 und S2 mit Bezug auf Figur 2 beschrieben. Vorgegeben wird eine Anzahl k >= 1. Im gezeigten Ausführungsbeispiel ist k = 4. Zu jedem Schlüsselpunkt werden jeweils die k nächstgelegenen Schlüsselpunkte ermittelt. Im Ausführungsbeispiel sind die k = 4 Schlüsselpunkte S1.1, ..., S1.4 die zum Schlüsselpunkt S1 nächstgelegenen Schlüsselpunkte, die k = 4 Schlüsselpunkte S2.1, ..., S2.4 die zum Schlüsselpunkt S2 nächstgelegenen. Wie zu erkennen ist, liegt in der Infrarotkamera IR selbst ein Schlüsselpunkt, nämlich der Schlüsselpunkt S1.1. Bei dem Vorgang, Schlüsselpunkte näher zur Infrarotkamera IR zu rücken, wird der Schlüsselpunkt S1 auf den Schlüsselpunkt S1' abgebildet, und der Schlüsselpunkt S2 wird auf den Schlüsselpunkt S2' abgebildet. Anstelle S1 und S2 werden in den nachfolgenden Verfahrensschritten S1' und S2' verwendet.

Gemäß einer Realisierungsform dieses rechnerischen Verschiebens werden drei Faktoren $f_{kNNdämpfung}$, $f_{streckung}$, $f_{dämpfung}$ vorgegeben. Für jeden Schlüsselpunkt Si wird jeweils ein Faktor fi gemäß der Formel fi = median {0, 1-x1/x2, 1} berechnet.

Hierbei ist

$$x1 = min \{dist(Si,Si.1), dist(Si,IR)\} + ... + min \{dist(Si,Si.k), dist(Si,IR)\},$$

$$x2 = k* f_{kNNdämpfung}.$$

Außerdem ist

$$Pos(Si') = Pos(Si) + fi*dist(Si,IR)*f_{streckung}*[Pos(Si)-Pos(IR)] +$$

$$[Pos(Si)-Pos(IR)] / [dist(Si,IR)*f_{dämpfung}].$$

Pos(IR) bezeichnet die Position der Infrarotkamera IR in dem dreidimensionalen Koordinatensystem, Pos(Si) die Position des Schlüsselpunkts Si (i=1,2,...). Mit dist(Si,IR) wird der Abstand zwischen dem Schlüsselpunkt Si und der Infrarotkamera IR bezeichnet.

Um die drei Faktoren $f_{kNNdämpfung}$, $f_{streckung}$, $f_{dämpfung}$ zu bestimmen, wird in einer Ausgestaltung eine Stichprobe mit mehreren Schlüsselpunkten erzeugt. Eine Fehlerfunktion wird minimiert. Die zu minimierende Fehlerfunktion ist der summierte Abstand zwischen den Schlüsselpunkten und der nächstgelegenen Wand. Idealerweise liegen alle Schlüsselpunkte auf jeweils einer Wand W. Die drei Faktoren $f_{kNNdämpfung}$, $f_{streckung}$, $f_{dämpfung}$ sind die drei Variablen dieser Fehlerfunktion.

Die Infrarotkamera IR hat ein annähernd kegelförmiges Blickfeld. Von der Kamera gehen gedachte Strahlen aus, die in diesem Blickfeld liegen. Eine Strecke dieses Strahls zwischen der Infrarotkamera IR und einem rechnerisch korrigierten Schlüsselpunkt läuft vollständig durch einen freien Raum.

In dem dreidimensionalen Koordinatensystem wird ein Quader positioniert, in dem das zu untersuchende Gebäude liegt. Weiterhin werden in dem Koordinatensystem quaderförmige Elemente dergestalt positioniert, dass der gesamte Quader für das Gebäude mit quaderförmigen Elementen ausgefüllt ist und die quaderförmigen Elemente unmittelbar aneinandergrenzen, ohne sich zu überlappen. Ein solches quaderförmiges Element wird im Folgenden als "Voxel" bezeichnet. Bevorzugt wird der Quader für das Gebäude in die quaderförmigen Elemente unterteilt, d.h. jeder Punkt des Quaders gehört zu einem Voxel, und die Voxel überlappen sich nicht. In einer Ausgestaltung hat jedes quaderförmige Element die Form eines Würfels. Anstelle Quader können auch anders geformte Polyeder verwendet werden.

Die Voxel sind bevorzugt disjunkt zueinander und grenzen aneinander an. Bevorzugt werden die Voxel durch ein Gitter definiert. Um dieses Gitter so abzuspeichern, dass rasch die Position und die Ausdehnung eines Voxels im Koordinatensystem ermittelt werden kann, wird das Voxel-Gitter bevorzugt in einem Datenspeicher durch einen sogenannten Octree repräsentiert. Ein Octree ist eine Baumstruktur, die in jeder Ebene ein Volumen in acht gleich große Quader aufteilt. In einer Ausgestaltung werden acht Voxel (Quader) in einer Ebene dieses Baums, die gleich klassifiziert sind, durch einen einzigen Voxel mit gleicher Klassifikation ersetzt. Dies gilt insbesondere für acht freie Voxel in einer Ebene. Diese Ersetzung lässt sich auch in der darüberliegenden Ebene fortsetzen.

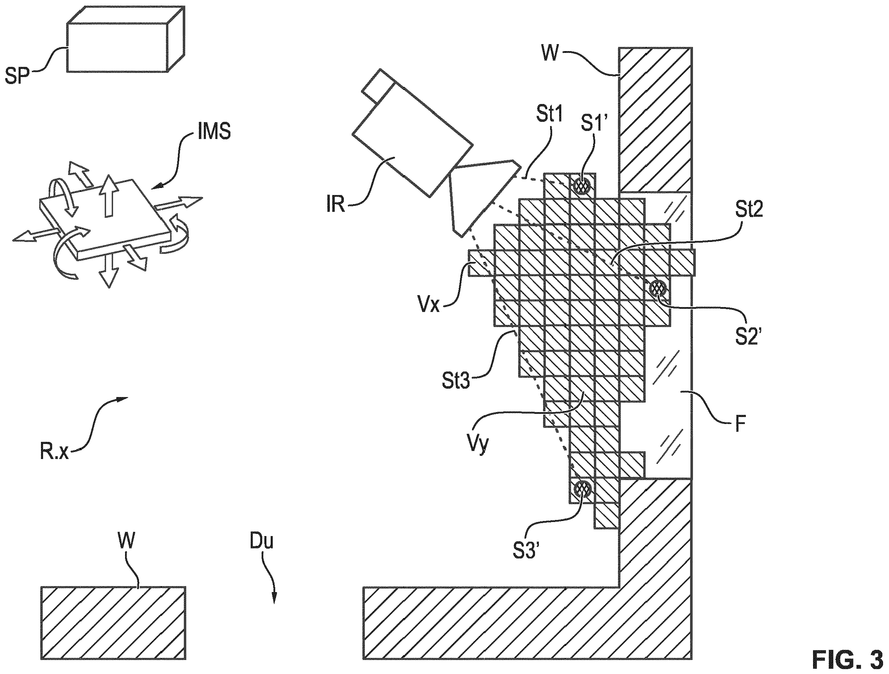

Figur 3 zeigt in einer Draufsicht die Situation von Figur 2 mit rechnerisch verschobenen Schlüsselpunkten S1', S2', S3', ... und beispielhaft drei Strecken St1, St2, St3, die von der Infrarotkamera IR zu den drei Schlüsselpunkten S1', S2', S3' verlaufen. Außerdem sind beispielhaft zwei Voxel Vx und Vy bezeichnet. Alle Voxel, durch die eine Strecke S1', S2', S3' verläuft, sind in dieser Blickrichtung freie Voxel. Zur Illustration sind in Figur 3 die Wand W, das Fenster F und der Durchgang Du eingetragen. Deren Positionen sind freilich vorab nicht bekannt.

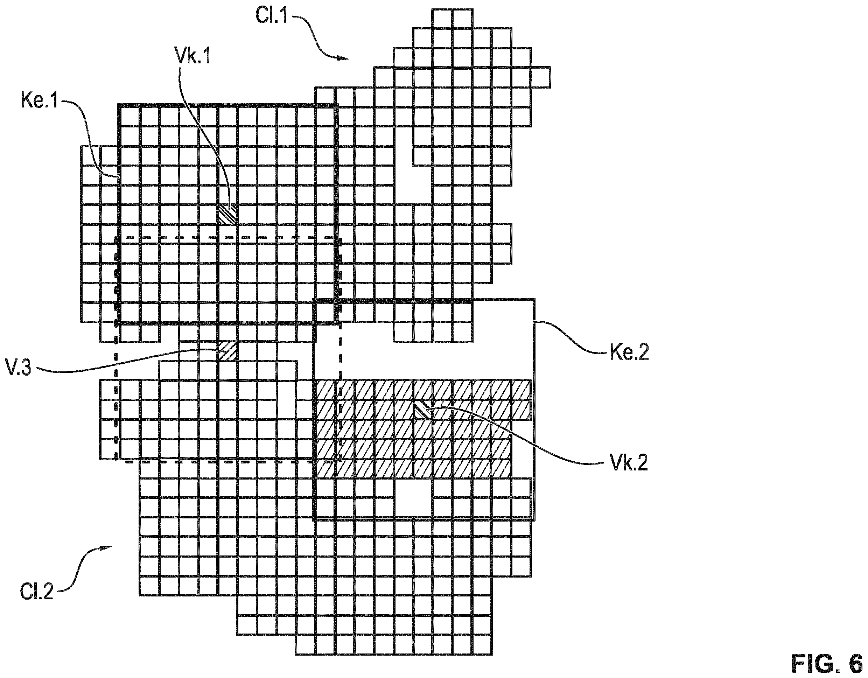

Eine Grundidee des Verfahrens ist die folgende: Die Schlüsselpunkte in Bildern der Infrarotkamera IR werden erkannt und in dem dreidimensionalen Koordinatensystem positioniert, beispielsweise durch Projizieren. Alle Voxel auf der Strecke von der Infrarotkamera IR zu einem Schlüsselpunkt werden als frei markiert. Die als frei markierten Voxel Vx, Vy sind beispielhaft in Figur 3 eingetragen. Figur 6 zeigt beispielhaft freie Voxel in einer Draufsicht, also von oben.

Figur 3 und nachfolgende Figuren zeigen eine Vereinfachung in einer Ebene Eb. In der Praxis erzeugt die Infrarotkamera IR nacheinander Bilder aus unterschiedlichen Positionen und in verschiedene Blickrichtungen. Zu berücksichtigen ist, dass die Position und die Orientierung der Infrarotkamera IR, die mit Hilfe der inertialen Sensoreinheit IMS ermittelt werden, von der tatsächlichen Position und Orientierung zu diesem Zeitpunkt abweichen können. Außerdem können in dem Gebäude Personen und auch Gegenstände vorhanden sein, die sich bewegen, während die Infrarotkamera IR und die inertiale Sensoreinheit IMS durch das Gebäude bewegt werden. Daher kann es vorkommen, dass ein und dasselbe Voxel von einer Position und in eine Blickrichtung zu einem Zeitpunkt als freies Voxel und von einer anderen Position und / oder in eine andere Blickrichtung und / oder zu einem anderen Zeitpunkt als ein belegtes Voxel eingestuft wird.

In der Regel sind die Schlüsselpunkte an einer Begrenzung eines Raums positioniert, aber nicht im Inneren dieses Raums. Ein belegtes Voxel liegt daher in der Regel nicht im Inneren eines Raums, sondern z.B. auf einer Wand oder einer Decke, Schräge, Zwischendecke oder auf einem sonstigen starren Gegenstand im Raum. Die Tatsache, dass sich die Infrarotkamera IR im Inneren eines Raums befindet, die Schlüsselpunkte hingegen in der Regel am Rand, hat folgende Konsequenz: Ein freies Voxel in der Mitte eines Raums wird häufig von vielen Strecken, die von der Infrarotkamera IR ausgehen, durchschnitten, während ein freies Voxel am Rande des Raums nur von wenigen Strecken durchschnitten wird. Auch das umgekehrte Ergebnis ist möglich, insbesondere wenn die Infrarotkamera IR häufig in der Nähe einer Wand verwendet wird.

Für jedes Voxel wird jeweils eine Gesamtbewertung dafür ermittelt, dass dieses Voxel belegt ist. Bevorzugt ist die Gesamtbewertung eine Zahl zwischen 0 und 1, die als eine Wahrscheinlichkeit aufgefasst werden kann. Eine Gesamtbewertung von 1 bedeutet, dass das Voxel sicher belegt ist, eine von 0, dass das Voxel sicher frei ist. Die Gesamtbewertung für ein Voxel wird aus der oder jeder Einzelbewertung für dieses Voxel hergeleitet, wobei jede Einzelbewertung sich auf eine Strecke zwischen der Infrarotkamera IR und einem Schlüsselpunkt bezieht und daraus resultiert, dass alle Voxel auf dieser Strecke als frei markiert werden. Das Voxel, in dem der Schlüsselpunkt liegt, wird nicht als freies Voxel markiert. Optional ist auch jede Einzelbewertung eine Zahl zwischen 0 und 1. Die Unsicherheit in der Einzelbewertung resultiert insbesondere daraus, dass ein Voxel teilweise im freien Raum und teilweise in einer Wand liegen kann und eine Strecke durch den freien Teil des Voxels laufen kann und insbesondere nur einen Randbereich des Voxels schneiden kann.

In einer Ausgestaltung ist jede Einzelbewertung eine logarithmische Wahrscheinlichkeit, und die Gesamtbewertung für ein Voxel wird dadurch ermittelt, dass die Einzelbewertungen für dieses Voxel addiert werden. Die Summe der Einzelbewertungen ist der Logarithmus der gesuchten Gesamtbewertung.

Abhängig von der ermittelten Gesamtbewertung wird entschieden, ob ein Voxel ein freies Voxel, ein belegtes Voxel oder ein nicht klassifizierbares Voxel ist. Ein derartiges Verfahren wird in A. Hornung, K. M. Wurm, M. Bennewitz, C. Stachniss & W. Burgard: "OctoMap: An efficient probabilistic 3D mapping framework based on octrees", Autonomous Robots Vol. 34 No. 3, pp. 189 - 206, 2013 beschrieben, aber nicht für die hier beschriebene Anwendung.

Im Ausführungsbeispiel werden eine untere Schranke $n_{Bew,min}$ für die Anzahl von Strecken, die ein Voxel schneiden müssen, sowie eine Grenze $p_{thr}$ zwischen 0 und 1 vorgegeben. Ein Voxel ist nicht klassifizierbar, wenn weniger als $n_{Bew,min}$ Strecken dieses Voxel schneiden. Die Mindestanzahl $n_{Bew,min}$ kann 1 betragen, und ein Voxel ist genau dann nicht klassifizierbar, wenn keine Strecke dieses Voxel schneidet. Ein Voxel, das von mindestens $n_{Bew,min}$ Strecken geschnitten wird, ist ein freies Voxel, wenn seine Gesamtbewertung kleiner als $p_{thr}$ ist, und ansonsten ein belegtes Voxel.

Durch das nachfolgend beschriebene Verfahren werden nacheinander zusammenhängende freie Räume auf der Etage detektiert. Ein zusammenhängender Cluster von freien Voxel bildet einen Raum. Jedes freie Voxel gehört zu höchstens einem Cluster. Nachfolgend wird beschrieben, wie derartige Cluster in dem dreidimensionalen Koordinatensystem schrittweise erzeugt werden.

Das Verfahren verwendet sogenannte Kernel, die probeweise um freie Voxel herum gelegt werden. Eine Verwendung von kreisförmigen Kernels wird in M. Ester, H. P. Kriegel, J. Sander & X. Xu: "A density-based algorithm for discovering clusters in large spatial databases with noise", kdd, Vol. 96 No. 34, pp. 226 - 231, 1996 beschrieben. Dieses Verfahren wird dort als DBSCAN bezeichnet.

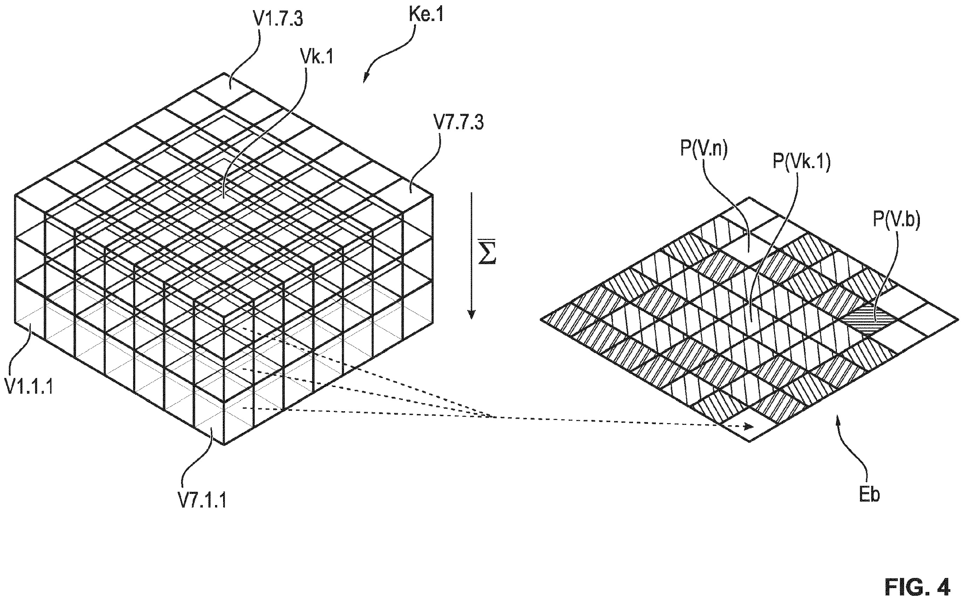

Ein Kernel ist im Ausführungsbeispiel hingegen ein Quader, der parallel zu den Achsen des dreidimensionalen Koordinatensystems ausgerichtet ist und nacheinander probeweise um jeweils ein Voxel gelegt wird, und zwar dergestalt, dass das Voxel im Zentrum des Kernel liegt. Diese Ausgestaltung berücksichtigt die Tatsache, dass die Wände, Böden und Decken in einem Gebäude in der Regel horizontal oder vertikal angeordnet sind, also parallel zu den Achsen des kartesischen Koordinatensystems. In einer Ausgestaltung des Ausführungsbeispiels besteht jeder Kernel aus 7 * 7 * 3 Voxel, nämlich jeweils 7 Voxel nebeneinander in x-Richtung und y-Richtung und 3 Voxel übereinander in z-Richtung. Im Beispiel hat der Kernel also N = 147 Voxel. Ein solcher Kernel Ke.1 wird in Figur 4 links gezeigt. Beispielhaft werden die Voxel V1.1.1, ..., V.7.7.3 gezeigt. Möglich ist auch, dass ein Kernel eine andere Anzahl von Voxel aufweist, z.B. N = 11 * 11 * 3 Voxel, vgl. Figur 6.

Bevorzugt haben alle Voxel die gleichen Abmessungen. Ein Parameter des erfindungsgemäßen Verfahrens ist die vertikale Seitenlänge eines Voxels. Diese vertikale Seitenlänge kann vorab festgelegt werden, und zwar abhängig von einer zu erwartenden oder typischen Dicke, also vertikalen Abmessung, einer Decke. Im Ausführungsbeispiel wird von einer Dicke einer Decke von 30 Zentimetern ausgegangen. Jede vertikale Seitenlänge eines Voxels liegt bevorzugt zwischen 20 cm und 30 cm. Ein physikalischer Grund für diese Abmessung ist: Die Höhe eines Kernels mit drei übereinanderliegenden Voxeln liegt zwischen 60 cm und 90 cm. Ein Grund: Legt man den Kernel um ein Voxel in einem Raum, so steht der Kernel um eine Entfernung nach oben oder unten über das Voxel über, dessen Dicke maximal zwischen 30 cm und 45 cm liegt. Diese Distanz ist geringer als die vorausgesetzte Dicke einer Zimmerdecke. Ein Kernel steht also nicht nach zwei Seiten über eine Zimmerdecke über. Dadurch ermöglicht das erfindungsgemäße Verfahren, mehrere übereinander liegende Räume mit hoher Zuverlässigkeit voneinander zu unterscheiden.

Bevorzugt liegt auch jede horizontale Seitenlänge eines Voxels zwischen 20 cm und 30 cm. Falls ein Kernel in jeder horizontalen Ausdehnung, also in der Länge und in der Breite, jeweils mindestens sechs Voxel umfasst, so ist jede horizontale Abmessung des Kernels größer als eine typische horizontale Abmessung einer Tür oder eines sonstigen Durchgangs zwischen zwei Räumen eines Gebäudes. Dieses Merkmal reduziert die Gefahr, dass derselbe Cluster Teile von zwei verschiedenen Räumen umfasst, was ein Fehler wäre.

Zunächst wird die Grundidee beschrieben, wie derartige Cluster gebildet werden, und anschließend wird eine bevorzugte Verfeinerung dargelegt. Sowohl die Grundidee als auch die Verfeinerung berücksichtigen die Tatsache, dass das Verfahren in einem Gebäude angewendet wird und das Gebäude in der Regel Räume mit senkrechten und waagerechten Begrenzungen (Wände, Decken, Böden) aufweist, die Räume umschließen, wobei jeder Raum die Form eines Quaders oder einer Zusammensetzung mehrerer Quader ist, aber nicht eine beliebige geometrische Form aufweist.

Gemäß der Grundidee wird ein Cluster wie folgt schrittweise erzeugt:

Vorgegeben wird eine Mindestanzahl $n_{min}$. Falls der Kernel die Größe von N Voxel hat, so ist $n_{min}$ eine Anzahl, die größer oder gleich N/2 und kleiner als N ist. Im gezeigten Beispiel beträgt N = 7 * 7 * 3 = 147 und $n_{min}$ beispielsweise 100.

Zunächst wird nach dem ersten Voxel eines neuen Clusters gesucht, und zwar durch die folgenden Schritte:

- Zufällig wird als Start-Voxel ein als frei klassifiziertes Voxel ausgewählt. Das Start-Voxel ist der erste Kandidat für den neuen Cluster.

- Der quaderförmige Kernel wird dergestalt um das Start-Voxel gelegt, dass sich das Start-Voxel im Zentrum des Kernels befindet.
- Gezählt wird, wie viele weitere freie Voxel sich in dem Kernel um das Start-Voxel befinden.
- Falls diese Anzahl freier Voxel im Kernel größer oder gleich der Mindestanzahl $n_{min}$ ist, so ist das Start-Voxel im Zentrum des Kernels ein sogenanntes Kern-Voxel und gehört zu einem neuen Cluster.
- Ansonsten wird zufällig ein weitere als frei klassifiziertes Voxel als Start-Voxel ausgewählt, und die gerade beschriebenen Schritte werden für dieses weitere Voxel durchgeführt. Der Kernel wird also um dieses weitere Voxel gelegt.

Anschließend wird dieses Cluster schrittweise um weitere Voxel erweitert, bis ein Abbruchkriterium erfüllt ist. Die schrittweise Erweiterung geschieht durch die folgenden Schritte:

- Der jeweils vorherige Schritt lieferte ein Kernel mit einem Voxel im Zentrum dieses Kernels, wobei dieses Voxel als Kern-Voxel klassifiziert wurde und daher bereits zu dem Cluster gehört.
- Der Cluster wird um mindestens ein, bevorzugt um jedes weitere freie Voxel in diesem Kernel erweitert.
- Nacheinander wird jedes weitere freie Voxel in diesem Kernel als Kandidat markiert.
- Der Kernel wird nacheinander um jeden Kandidaten gelegt, und zwar so, dass sich der Kandidat im Zentrum des Kernels befindet.
- Gezählt wird, ob sich in dem Kernel um den Kandidaten herum mindestens $n_{min}$ weitere freie Voxel befinden.
- Falls dies der Fall ist, wird der Cluster um mindestens ein freies Voxel des Kernels ergänzt, bevorzugt um jedes freie Voxel.

Durch dieses Verfahren wird der Cluster schrittweise erzeugt und in jedem Schritt ausgedehnt. Das Abbruchkriterium ist erfüllt und der Cluster ist fertig erzeugt, wenn das gerade beschriebene Verfahren kein weiteres Voxel liefert, das zu dem Cluster gehört - mit anderen Worten: wenn jeder auf diese Weise aufgefundene Kandidat untersucht wurde und keine neuen Kandidaten hinzukommen.

Die Anwendung der Grundidee führt zu einem Cluster, der aus Kern-Voxel besteht. Um ein Kern-Voxel herum befinden sich weitere freie Voxel. Dadurch ist die Gefahr gering, dass ein Cluster in eine Wand hineinragt, was ein falsches Ergebnis wäre.

Diese Grundidee kann aber trotzdem zu falschen Ergebnissen führen. Die Grundidee berücksichtigt nämlich lediglich die Anzahl von freien Voxeln in einem Kernel, aber nicht die Position der freien Voxel relativ zu dem Kandidaten im Zentrum des Kernels. Möglich ist, dass zwei verschiedene Voxel in ein und demselben Kernel um den Kandidaten herum zu zwei unterschiedlichen Räumen gehören, beispielsweise weil eine Wand zwischen diesen beiden Räumen durch den Kernel hindurch läuft. Die gerade beschriebene Grundidee könnte dazu führen, dass diese beiden Voxel als zu demselben Cluster gehörig gekennzeichnet werden, obwohl sie in zwei unterschiedlichen Räumen liegen. Diesen unerwünschten Effekt könnte man vermeiden, indem man die Mindestanzahl $n_{min}$ auf einen hohen Wert setzt, also nahe bei N. Dann allerdings kann es passieren, dass für einen Raum zwei disjunkte Cluster anstelle eines einzigen Clusters gebildet werden. Dies kann ebenfalls zu einem falschen Ergebnis führen.

Die nachfolgende Verfeinerung der Grundidee reduziert die Gefahr, dass ein derartiges falsches Ergebnis entsteht.

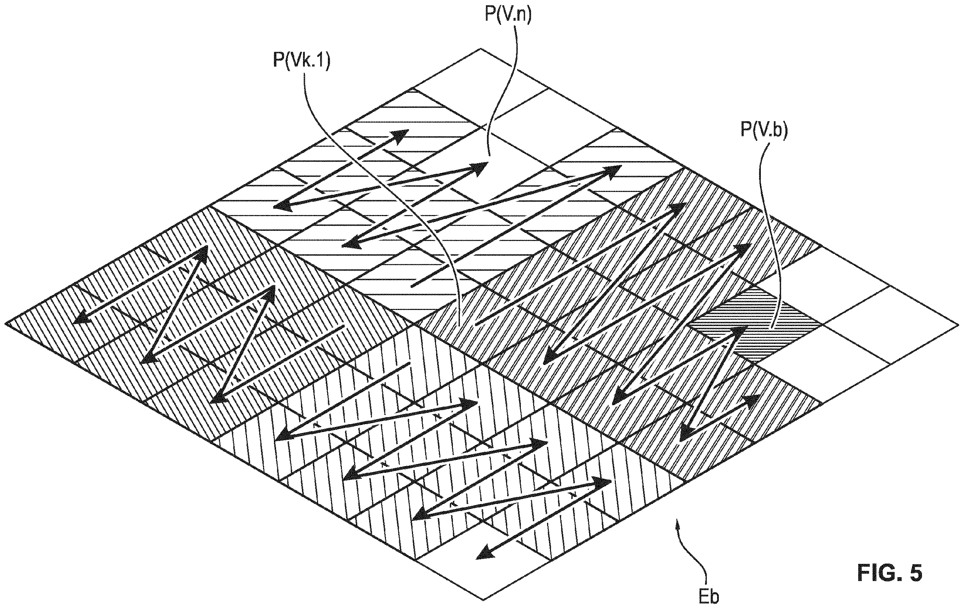

Nachfolgend werden zwei Realisierungsformen mit dieser Verfeinerung mit Bezug auf Figur 4 und Figur 5 beschrieben. Beide Realisierungsformen der Verfeinerungen betreffen das Kriterium für die Entscheidung, wann ein Kandidat als Kern-Voxel klassifiziert und daher als zu einem Cluster gehörig betrachtet wird. Beide Realisierungsformen ersetzen das Zählen durch ein anderes Vorgehen.

Figur 5 zeigt eine horizontale Ebene Eb, die durch einen Kernel geht. Der Schnitt oder auch die Projektion eines Voxels mit dieser Ebene Eb ist ein Rechteck, im gezeigten Fall ein Quadrat. Das Rechteck P(Vk.1) gehört zu dem Kandidaten Vk.1, das Rechteck P(V.b) zu einem als belegt klassifizierten Voxel V.b und das Rechteck P(V.n) zu einem nicht klassifizierbaren Voxel V.n.

Die erste Realisierungsform der Verfeinerung wird genau wie die Grundidee im gesamten Kernel durchgeführt. Das Voxel (der Kandidat) Vk.1 befindet sich im Zentrum dieses Kernels. Ausgehend von dem Kandidaten Vk.1 wird eine topologisch zusammenhängende und lückenfreie dreidimensionale Menge von Voxeln im Kernel ermittelt. Diese Menge wird an ihren Rändern von belegten Voxeln, nicht klassifizierbaren Voxeln und den rechteckigen Seitenflächen des Kernels begrenzt. Im Inneren besteht diese Menge ausschließlich aus freien Voxeln. "Topologisch zusammenhängend" bedeutet: Zwei Voxel der Menge grenzen unmittelbar aneinander oder lassen sich durch einen Streckenzug miteinander verbinden, wobei der Streckenzug ausschließlich durch die Menge führt. "Lückenfrei" bedeutet: im Inneren der Menge befindet sich kein Voxel, der nicht zur Menge gehört. Anders formuliert: Ein Voxel, das nicht zur Menge gehört, grenzt an eine Seitenfläche des Kernels an oder lässt sich durch eine Strecke, die völlig außerhalb des Kernels liegt, mit einer Seitenfläche verbinden.

Figur 5 veranschaulicht das Vorgehen, um eine topologisch zusammenhängende und lückenfreie Menge zu erzeugen, anhand von Pfeilen, die in der Ebene Eb liegen. Bei der ersten Realisierungsform wird aber ausgehend vom Kandidaten Vk.1 in alle sechs Richtungen im Raum "gewandert", also auch senkrecht zur Ebene Eb. Bei der ersten Realisierungsform wird die aufgefundene topologisch zusammenhängende und lückenfreie Menge u.a. von den Voxeln V.b und V.n begrenzt.

Bei der ersten Realisierungsform wird gezählt, aus wie vielen Voxeln die topologisch zusammenhängende und lückenfreie Menge im Kernel um Vk.1 besteht. Diese Anzahl von Voxeln wird wiederum mit einer vorgegebenen Mindestanzahl $n_{min}$ verglichen. Falls die Anzahl größer oder gleich der Mindestanzahl $n_{min}$ ist, so ist der Kandidat Vk. 1 ein Kern-Voxel und gehört zu dem neuen beziehungsweise zu dem bereits angelegten Cluster. Jedes freie Voxel in der topologisch zusammenhängenden und lückenfreien Menge ist ein Kandidat dafür, ein Kern-Voxel zu sein und daher zu demselben Cluster wie das Voxel Vk.1 im Zentrum zu gehören. Dieser Kandidat wird wiederum untersucht, wofür wiederum ein Kernel um den Kandidaten herum gelegt wird.

Diese erste Realisierungsform vermeidet in der Regel den Fehler, dass ein Cluster wenigstens teilweise zwei Räume überdeckt, wobei diese beiden Räume durch eine Wand voneinander getrennt sind. In vielen Fällen führt diese erste Realisierungsform aber zu relativ gezackten oder anderweitig unregelmäßigen Rändern der Cluster, insbesondere in der Schnittfläche des Clusters mit einer vertikalen Ebene. Ein Raum in einem Gebäude wird hingegen in der Regel von vertikalen Wänden und horizontalen Böden und Decken begrenzt. Die zweite Realisierungsform führt in vielen Fällen zu glatteren Begrenzungen der Cluster.

Bei der zweiten Realisierungsform wird der Kernel durch eine vertikale Projektion, also eine Projektion parallel zur z-Achse, auf eine Ebene projiziert. Figur 4 veranschaulicht beispielhaft, wie der Kernel Ke.1 (links) auf die Ebene Eb (rechts) projiziert wird. Diese Ebene Eb wird auch in Figur 5 gezeigt. Jedes Voxel im Kernel wird bei der Projektion auf ein Rechteck projiziert, beispielsweise die Voxel Vk.1, V.n, V.b auf die Rechtecke P(Vk.1), P(V.n), P(V.b). Weil in dem gezeigten Beispiel der Kernel 7 * 7 * 3 Voxel hat, hat die Projektion in die Ebene Eb 7 * 7 = 49 Rechtecke.

Im gezeigten Ausführungsbeispiel hat der Kernel in z-Richtung eine Ausdehnung von n = 3 Voxel. Jeweils n = 3 übereinanderliegende Voxel werden auf dasselbe Rechteck in der Ebene Eb projiziert. Gezählt wird, wie viele von diesen n übereinanderliegenden Voxeln als frei oder als belegt klassifiziert sind. Die übrigen Voxel sind nicht klassifizierbar.

Vorgegeben wird eine Mindestanzahl $n_{Proj,min} \leq n$, z.B. $n_{Proj,min} = 1$ oder $n_{Proj,min} = 2$. Falls von den n übereinanderliegenden Voxel mindestens $n_{Proj,min}$ Voxel klassifiziert sind, so wird aus den Gesamtbewertungen der $n_{Proj,min}$ übereinanderliegenden klassifizierten Voxel eine Gesamtbewertung desjenigen Rechtecks, auf welches die n übereinanderliegenden Voxel projiziert sind, berechnet. Beispielsweise wird das arithmetische Mittel über die Gesamtbewertungen der $n_{Proj,min}$ übereinanderliegenden klassifizierten Voxel gebildet. Abhängig von dieser Gesamtbewertung des Rechtecks wird das Rechteck als frei oder als belegt bewertet. Hierfür wird die oben erwähnte Schranke $p_{thr}$ angewendet. Falls von den n übereinanderliegenden Voxeln, die auf ein Rechteck projiziert sind, weniger als $n_{Bew,min}$ klassifiziert sind, wird auch das Rechteck als nicht klassifizierbar bewertet.

Im Beispiel von Figur 4 ist das Rechteck P(V.b) belegt, das Rechteck P(V.b) frei und das Rechteck P(V.n) nicht klassifizierbar. In Figur 4 rechts und in Figur 5 werden drei Arten von Rechtecken gezeigt:

- freie Rechtecke [senkrecht oder schräg schraffiert dargestellt, z.B. P(Vk.1)], das sind Rechtecke mit einer Bewertung kleiner als $p_{thr}$,
- belegte Rechtecke [waagrecht schraffiert dargestellt, z.B. P(V.b)], das sind Rechtecke mit einer Bewertung gleich oder größer als $p_{thr}$, und
- nicht klassifizierbare Rechtecke [weiß dargestellt, z.B. P(V.n)], das sind Rechtecke, auf die weniger als $n_{Proj,min}$ freie oder belegte Voxel projiziert sind.

In Figur 4 ist die Schranke $p_{thr}$ beispielsweise gleich 0,8. Mindestens zwei verschiedene Bewertungen kleiner als die Schranke $p_{thr}$ sind möglich, daher werden In Figur 4 und Figur 5 zwei unterschiedliche Schraffuren für freie Rechtecke gezeigt. freie Rechtecke werden durch unterschiedliche Arten von senkrechter oder schräger Schraffur gezeigt, belegte Rechtecke durch waagerechte Schraffur.

Bei der zweiten Realisierungsform wird in der Ebene Eb eine zweidimensionale topologisch zusammenhängende und lückenfreie Menge gebildet. Die Projektion P(Vk.1) für den Kandidaten Vk.1 liegt in dieser topologisch zusammenhängenden und lückenfreien Menge. Um diese Menge zu bilden, werden diejenigen freien Rechtecke (Projektionen von Voxeln) gesucht, die an die Projektion P(Vk.1) des Kandidaten Vk.1 unmittelbar oder mittelbar angrenzen. Dies wird in Figur 5 durch die Pfeile in die vier Richtungen in der Ebene Eb veranschaulicht. Die zweidimensionale topologische zusammenhängende und lückenfreie Menge ist von den belegten Rechtecken, den nicht klassifizierbaren Rechtecken und von den Kanten der Ebene Eb begrenzt.

Im gezeigten Beispiel gehören 2 + 3 = 5 Rechtecke nicht zu der topologisch zusammenhängenden und lückenfreien Menge und werden nicht von einem Pfeil überstrichen. Die übrigen 7 * 7 - 5 = 44 Rechtecke gehören zu der topologischen Menge und werden von jeweils mindestens einem Pfeil überstrichen.

Gezählt wird, wie viele Rechtecke zu der topologisch zusammenhängenden und lückenfreien Menge gehören. Falls diese Anzahl größer oder gleich einer vorgegebenen Mindestanzahl ist, so ist der Kandidat Vk.1 ein Kern-Voxel, und der Cluster wird um freie Voxel aus dem Kernel ergänzt, ansonsten nicht.

Wie bereits dargelegt, werden weitere Kandidaten in dem Kernel, in dessen Zentrum das Kern-Voxel Vk.1 liegt, ausgewählt und daraufhin überprüft, ob sie ebenfalls Kern-Voxel sind. Gemäß der zweiten Realisierungsform werden nicht alle Voxel in dem Kernel um Vk.1 herum ausgewählt. Vielmehr wird eine Rückprojektion durchgeführt, um die weiteren Voxel auszuwählen, die nunmehr Kandidaten werden.

Bei der Rückprojektion wird zunächst jedes Rechteck in der Projektion desjenigen Kernels auf die Ebene Eb ausgewählt, welches kumulativ folgende Eigenschaften erfüllt:

- Das Rechteck ist eine Projektion eines Voxels des Kernels Ke.1 um Vk.1 herum auf die Ebene Eb.

- Das Rechteck ist als frei oder als belegt klassifiziert.

Anschließend wird jedes freie Voxel im Kernel Ke.1 um Vk.1 ausgewählt, welches folgende Eigenschaft erfüllt: Das freie Voxel wurde bei der Projektion auf ein ausgewähltes Rechteck in der Ebene Eb projiziert. Jedes dergestalt ausgewählte freie Voxel im Kernel Ke.1 ist ein Kandidat dafür, ebenfalls zum Cluster zu gehören.

Figur 6 zeigt in einer Draufsicht die Voxel von Figur 4 sowie beispielhaft die beiden Projektionen von zwei Kern-Voxeln Vk.1 (rot) und Vk.2 (blau). In diesem Beispiel besteht jeder Kernel aus 11 * 11 * 3 Voxeln. Gezeigt werden zwei Rechtecke, nämlich die Projektionen der beiden Kernel Ke.1 um das Kern-Voxel Vk.1 und Ke.2 um das Kern-Voxel Vk.2 auf die Zeichenebene. Die beiden Kern-Voxel Vk.1 und Vk.2 gehören zu zwei verschiedenen Clustern Cl.1 und Cl.2, d.h. liegen in zwei verschiedenen Räumen. Die beiden Cluster Cl.1 und Cl.2 werden so erzeugt, wie dies mit Bezug auf Figur 4 und Figur 5 veranschaulicht wurde.

Jedes Cluster Cl.1, Cl.2, das gemäß der gerade beschriebenen zweiten Realisierungsform generiert wurde, ist eine dreidimensionale topologisch zusammenhängende Menge von Voxeln. Das Cluster Cl.1, Cl.2 ist aber nicht notwendigerweise lückenfrei.

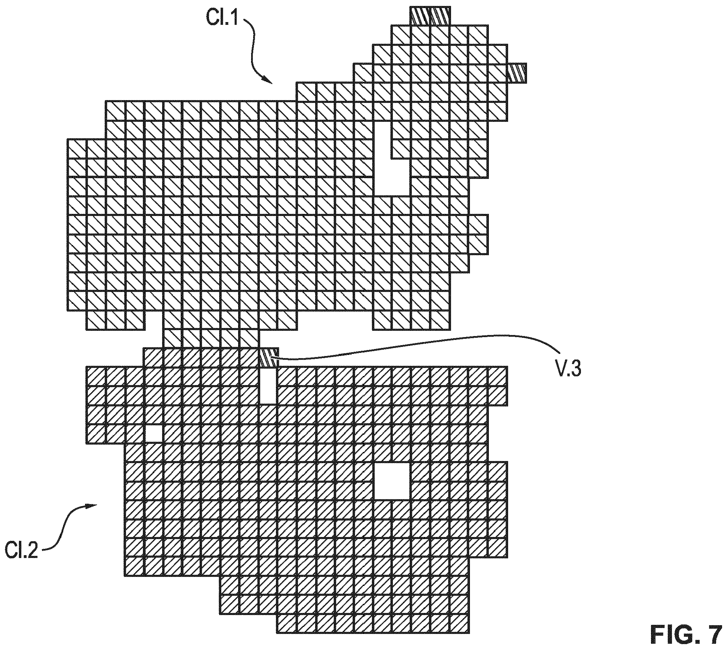

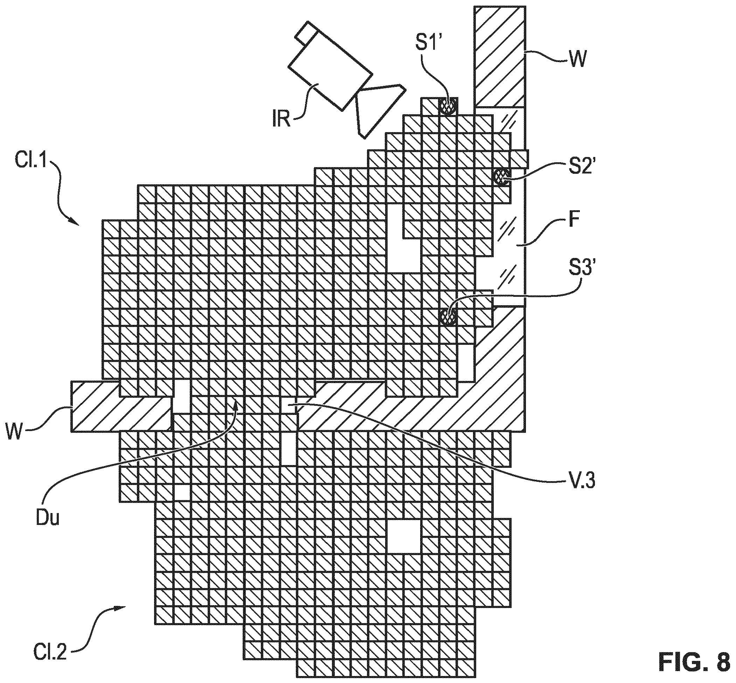

Figur 7 zeigt die beiden Cluster Cl.1 und Cl.2, die auf die gerade beschriebene Weise erzeugt werden. Auch die erzeugten Cluster Cl.1 und Cl.2 sind dreidimensionale Objekte im dreidimensionalen Koordinatensystem. Figur 8 zeigt die Projektion in die x-y-Ebene. Ausgangspunkte sind die Kern-Voxel Vk.1 und Vk.2. Dargestellt sind die freien Voxel der Cluster Cl.1 und Cl.2 sowie belegte und nicht klassifizierte Voxel an den Rändern und im Inneren der Cluster, beispielsweise das belegte Voxel V.3.

Figur 8 zeigt die beiden Cluster Cl.1 und Cl.2 von Figur 7 sowie die Wand W, den Durchgang Du, die Infrarotkamera IR und verschobene Schlüsselpunkte S1', S2', S3' von Figur 2.

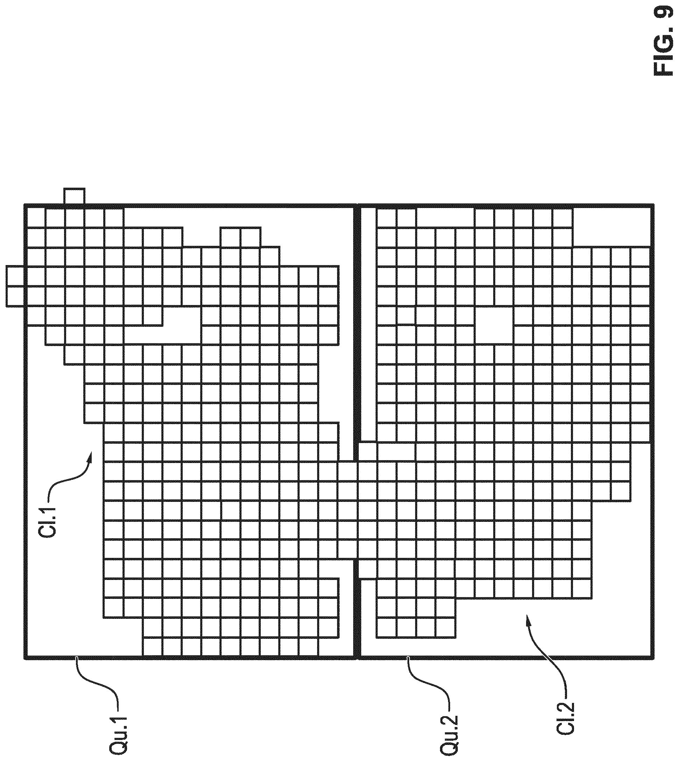

Ein Raum hat häufig die Form eines Quaders oder besteht aus mehreren Quadern. Daher wird probeweise um jedes Cluster Cl.1, Cl.2 jeweils ein umhüllender Körper in Form eines Quaders gelegt. Figur 9 zeigt die Projektionen der Cluster in die x-y-Ebene sowie die Projektionen der beiden Quader Qu.1, Qu.2, die um die beiden Cluster Cl.1, Cl.2 gelegt sind, also zwei Rechtecke, die sich nicht überschneiden. Falls das Volumen des Raums, den der Cluster Cl.1, Cl.2 im Quader Qu.1, Qu.2 ausfüllt, im Verhältnis zum Volumen des Quaders Qu.1, Qu.2 oberhalb einer vorgegebenen Anteils-Schranke liegt, so wird der Raum als quaderförmig angesehen, und der Quader Qu.1, Qu.2 beschreibt die Begrenzungen (Boden, Decke, Wände) dieses Raums. Ansonsten wird ein Streckenzug um die Projektion des Clusters Cl.1, Cl.2 auf die x-y-Ebene gelegt. Dieser Streckenzug beschreibt näherungsweise den Grundriss des Raums. Über die einzelnen Strecken des Streckenzugs werden vertikale Ebenen gelegt, welche die Wände beschreiben.

Figur 10 zeigt beispielhaft mehrere Cluster Zus.1, Zus.2, ..., die so wie gerade beschrieben erzeugt wurden und die Räume R.1, R.2, ... von Figur 1 beschreiben. Der Cluster Zus.Fl beschreibt den Flur Fl. Außerdem ist die Trajektorie Tr eingetragen. Figur 11 zeigt die Projektionen R.1, R.2 der Quader, die um diese Cluster Zus.1, Zus.2, ... gelegt wurden, so wie dies mit Bezug auf Figur 9 beschrieben wurde.

**Bezugszeichenliste**

| Cl.1, Cl.2 | Cluster von Voxeln um die Kern-Voxel Vk.1, Vk.2 herum, beschreiben jeweils einen Raum |
|---|---|
| Du | Durchgang in der Wand W des Raums R.x |
| Eb | horizontale Ebene, auf die die n übereinanderliegenden Voxel des Kernels Ke.1 abgebildet werden |
| F | Fenster in der Wand W des Raums R.x |

(fortgesetzt)

| | |
|---|---|
| FI | Flur im Grundriss |
| IMS | inertiale Sensoreinheit eines Feuerwehrmanns, vermag die drei linearen Beschleunigungen und die drei Winkelbeschleunigungen im Raum zu messen, misst die aktuelle Position und Orientierung der Kamera IR, fungiert in einer Ausgestaltung als Messwertaufnehmer des Positionssensors |
| IR | Infrarotkamera (Wärmebildkamera) eines Feuerwehrmanns, erzeugt Infrarotbilder |
| k | Anzahl der benachbarten Schlüsselpunkte |
| Ke.1, Ke.2 | quaderförmige Kernel mit 7*7*3 Voxeln |
| n | Anzahl der Voxel, die im Kernel Ke.1 übereinander liegen |
| $n_{Bew,min}$ | Mindestanzahl von Strecken, die durch ein Voxel verlaufen, damit das Voxel als frei oder als belegt klassifiziert wird |
| $n_{min}$ | falls die Anzahl freier Voxel in einem Kernel größer oder gleich $n_{min}$ ist, so ist das Voxel im Zentrum des Kernels ein Kern-Voxel |
| $n_{Proj,min}$ | falls mindestens $n_{Proj,min}$ der n übereinander liegenden Voxel eines Kernel klassifiziert sind, wird die Projektion der n Voxel auf die Ebene Eb klassifiziert |
| P(Vk.1) | Projektion des freien Kern-Voxels Vk.1 auf die Ebene Eb, in der eine Suche durchgeführt wird |

| | |
|---|---|
| P(V.b) | Projektion eines belegten Voxels V.b auf die Ebene Eb |
| P(V.n) | Projektion eines nicht klassifizierten Voxels V.n auf die Ebene Eb |
| Pos(IR) | Position der Infrarotkamera IR im dreidimensionalen Koordinatensystem |
| Pos(S1), Pos(S2), ... | Position des Schnittpunkts S1, S2 im dreidimensionalen Koordinatensystem |
| Pthr | ein Voxel, das mindestens von $n_{Bew,min}$ Strecken geschnitten wird und eine Bewertung kleiner als $p_{thr}$ aufweist, ist ein freies Voxel |
| Qu.1, Qu.2 | Quader um die Cluster C1.1, Cl.2, fungiert als umhüllender Körper |
| R.1, R.2, ... | Rechtecke, die um die Flächen Zus.1, Zus.2, ... gelegt werden, beschreiben rechteckige Räume |
| R.x | Raum im Gebäude |
| S1, S2, S3 | Schlüsselpunkte im Raum R.x |
| S1.1, ... | Schlüsselpunkte, die dem Schlüsselpunkt S1 benachbart sind |
| S2.1, ... | Schlüsselpunkte, die dem Schlüsselpunkt S2 benachbart sind |
| S1', S2', S3' | auf die Kamera IR der verschobener Schlüsselpunkt |
| SP | Signalverarbeitungseinheit, welche ein Feuerwehrmann mit sich führt und welche das erfindungsgemäße Verfahren durchführt |
| St1, St2, St3 | Strecke von der Kamera IR zu einem Schlüsselpunkt S1', S2', S3' |
| Tp | Treppe, die im Grundriss gezeigt wird |
| V.1.1, ..., V.7.7.3 | Voxel des Kernels Ke.1 |
| V.b | belegtes Voxel |
| Vk.1, Vk.2 | Kern-Voxel |

| | |
|---|---|
| V.n | nicht klassifiziertes Voxel |

(fortgesetzt)

| W | Wand des Raums R.x, weist das Fenster F auf |
|---|---|
| Zus.1, Zus.2 | Cluster, beschreiben das jeweilige Innere der Räume R.1, R.2, ... |

**Patentansprüche**

1. Verfahren zur automatischen Generierung eines Raumplans für eine Etage eines Gebäudes,

   wobei ein dreidimensionales Koordinatensystem vorgegeben wird, bevorzugt ein kartesisches Koordinatensystem,
   wobei das Verfahren die von einer Signalverarbeitungseinheit (SP) automatisch durchgeführten Schritte umfasst, dass rechnerisch
   eine Menge von Voxeln (V1.1.1, ..., V.7.7.3, Vk.1, Vk.2, V.3, V.b, V.n) dergestalt erzeugt wird, dass jedes Voxel ein Polyeder, bevorzugt ein Quader, ist,
   wobei die Kanten des Polyeders parallel zu den Achsen des dreidimensionalen Koordinatensystems angeordnet sind,
   wobei die Voxel zusammen die Etage umschließen, für die ein Raumplan erzeugt werden soll,
   eine Kamera (IR) durch die Etage bewegt wird und beim Bewegt-Werden eine Abfolge von Bildern erzeugt,
   für jedes Bild der Abfolge die jeweilige Position und Orientierung der Kamera (IR) zu dem Zeitpunkt, an dem die Kamera (IR) das Bild erzeugt, gemessen wird,
   durch Auswertung von Bildern der Abfolge charakteristische Schlüsselpunkte (S.1, S.2, ...), die auf jeweils einer Wand (W) der Etage liegen,

      - ermittelt und
      - wenigstens näherungsweise im dreidimensionalen Koordinatensystem positioniert werden,

   freie Voxel (Vk.1) ermittelt werden, wobei ein freies Voxel (Vk.1) mindestens einmal zwischen der bewegten Kamera (IR) und einem Schlüsselpunkt (S.1, S.2, ...) liegt, ohne dass sich eine Wand (W) zwischen der Kamera (IR) und dem Voxel (Vk.1) befindet,
   wobei für die Ermittlung von freien Voxeln (Vk.1)

      - die Positionen der Schlüsselpunkte (S.1, S.2, ...) und
      - die gemessenen Positionen und Orientierungen der bewegten Kamera (IR)

   verwendet werden,
   mindestens ein Cluster (Cl.1, Cl.2) dergestalt generiert wird, dass

      - der oder jeder generierte Cluster (Cl.1, Cl.2) eine topologisch zusammenhängende Menge von freien Voxeln bildet und
      - jedes freie Voxel (Vk.1) zu höchstens einem Cluster (Cl.1, Cl.2) gehört, um jeden ermittelten Cluster (Cl.1, Cl.2) herum jeweils ein umhüllender Körper (Qu.1, Qu.2) dergestalt gelegt wird, dass die umhüllenden Körper (Qu.1, Qu.2) sich nicht durchdringen, und

   der Raumplan dergestalt erzeugt wird, dass jeder umhüllende Körper (Qu.1, Qu.2) Begrenzungen jeweils eines Raums (R.1, R.2) der Etage beschreibt.

2. Verfahren nach Anspruch 1,
   **dadurch gekennzeichnet, dass**

   der Schritt, einen Cluster (Cl.1, Cl.2) zu generieren, die Schritte umfasst, dass

      - ein freies Voxel (Vk.1) ausgewählt wird, das noch nicht zu einem Cluster gehört, und als erster Kandidat für einen neuen Cluster verwendet wird,
      - geprüft wird, ob der erste Kandidat (Vk.1) ein Kern-Voxel ist oder nicht,
      - dann, wenn der erste Kandidat (Vk.1) ein Kern-Voxel ist, der erste Kandidat (Vk.1) auch das erste Voxel des neuen Clusters (Cl.1, Cl.2) ist,
- mindestens ein weiteres freies Voxel als weiterer Kandidat ausgewählt wird,
- geprüft wird, ob der weitere Kandidat ein Kern-Voxel ist oder nicht, und
- die Generierung des Clusters (Cl.1, Cl.2) beendet wird, wenn ein vorgegebenes Abbruchkriterium erfüllt ist,

wobei ein Kandidat (Vk.1) dann ein Kern-Voxel ist, wenn

- der Kandidat (Vk.1) zu einer topologisch zusammenhängenden Menge von Voxeln gehört,
- das Innere dieser Menge ausschließlich aus freien Voxeln besteht und
- diese Menge ein vorgegebenes und von der Anzahl der Voxel der Menge abhängendes Kriterium erfüllt, insbesondere die Anzahl größer oder gleich einer vorgegebenen unteren Schranke ist,

wobei bei der Prüfung, ob ein Kandidat (Vk.1) ein Kern-Voxel ist oder nicht,

- probeweise die topologisch zusammenhängende Menge erzeugt wird und
- geprüft wird, ob die erzeugte Menge das Kriterium erfüllt,

wobei dann, wenn der weitere Kandidat ein Kern-Voxel ist,
der Cluster (Cl.1, Cl.2) um mindestens den weiteren Kandidaten, bevorzugt um jedes freie Voxel der probeweise erzeugten topologisch zusammenhängenden Menge,
ergänzt wird und
wobei ein weiteres freie Voxel der erzeugten topologisch zusammenhängenden Menge als weiterer Kandidat ausgewählt wird.

3. Verfahren nach Anspruch 2,
**dadurch gekennzeichnet, dass**

die Prüfung, ob ein Kandidat (Vk.1) ein Kern-Voxel ist oder nicht, die Schritte umfasst, dass
ein Polyeder, bevorzugt ein Quader (Ke.1) dergestalt um den Kandidaten (Vk.1) gelegt wird, dass

- der Polyeder (Ke.1) aus einer vorgegebenen Anzahl von aneinander angrenzenden Voxeln besteht,
- die Kanten des Polyeders (Ke.1) parallel zu den Achsen des dreidimensionalen Koordinatensystems angeordnet sind und
- der Kandidat (Vk.1) in einem Zentrum des Quaders (Ke.1) liegt, und die probeweise erzeugt topologisch zusammenhängende Menge so erzeugt wird, dass sie ausschließlich aus Voxeln des Polyeders (Ke.1) besteht.

4. Verfahren nach Anspruch 3,
**dadurch gekennzeichnet, dass**

die Prüfung, ob ein Kandidat (Vk.1) ein Kern-Voxel ist oder nicht, die weiteren Schritte umfasst, dass
der Polyeder (Ke.1) um den Kandidaten (Vk.1) durch eine vertikale Projektion dergestalt auf eine Ebene (Eb) projiziert wird, dass alle übereinander liegenden Voxel des Polyeders (Ke.1) auf jeweils dasselbe n-Eck, bevorzugt ein Rechteck [P(Vk.1, P(V.b), P(V.n)] projiziert werden,
jedes n-Eck [P(Vk.1, P(V.b), P(V.n)] abhängig von den übereinander liegenden Voxeln als freies n-Eck [P(Vk.1] oder als anderes n-Eck [(V.b), P(V.n)] klassifiziert wird,
beim Schritt, probeweise die topologisch zusammenhängende Menge zu erzeugen,
probeweise eine topologisch zusammenhängende Menge von n-Ecken [P(Vk.1, P(V.b), P(V.n)] erzeugt wird,
wobei die n-Ecken [P(Vk.1, P(V.b), P(V.n)] der erzeugten Menge zu der Menge von n-Ecken gehören, die durch die Projektion des Polyeders (Ke.1) auf die Ebene (Eb) erzeugt wurden, und der Kandidat (Vk.1) dann ein Kern-Voxel ist, wenn die erzeugte Menge von n-Ecken [P(Vk.1, P(V.b), P(V.n)] ein von der Anzahl der n-Ecken der Menge abhängendes Kriterium erfüllt,
insbesondere die Anzahl größer oder gleich einer vorgegebenen Mindestanzahl ist.

5. Verfahren nach einem der Ansprüche 2 bis 4,
**dadurch gekennzeichnet, dass**

die topologisch zusammenhängende Menge schrittweise ausgehend von dem Kandidaten (Vk.1) oder von der Projektion des Kandidaten [P(Vk.1)] auf die Ebene (Eb) probeweise dergestalt erzeugt wird,

dass im Inneren der topologisch zusammenhängenden Menge keine Lücke auftritt,

also kein Voxel oder keine Projektion eines n-Ecks auf die Ebene (Eb) im Inneren der Menge nicht zur erzeugten Menge gehört.

6. Verfahren nach einem der vorhergehenden Ansprüche,
**dadurch gekennzeichnet, dass**

bei der Ermittlung von freien Voxeln für jedes Voxel (Vk.1) jede Strecke (St1, St2, St3) ermittelt wird, welche von der Kamera (IR) zu einem Schlüsselpunkt reicht und durch das Voxel verläuft,

dann, wenn für ein Voxel (Vk.1, V.b, V.n) mindestens eine gegebene Mindestanzahl von solchen Strecken (St1, St2, St3) durch das Voxel ermittelt wird,

- eine Bewertung des Voxels (Vk.1, V.b, V.n) berechnet wird, wobei diese Bewertung von der Anzahl der Strecken, die durch das Voxel verlaufen, und / oder von der jeweiligen Positionen jeder Strecke durch das Voxel (Vk.1, V.b, V.n) relativ zu dem Mittelpunkt des Voxels (Vk.1, V.b, V.n) abhängt, und
- das Voxel (Vk.1, V.b, V.n) abhängig von der Bewertung als ein freies Voxel (Vk.1) oder als ein belegtes Voxel (V.b) klassifiziert wird, und

dann, wenn für ein Voxel (Vk.1, V.b, V.n) weniger als die Mindestanzahl von solchen Strecken ermittelt wurde, das Voxel als ein nicht klassifizierbares Voxel (V.n) bewertet wird.

7. Verfahren nach einem der vorhergehenden Ansprüche,
**dadurch gekennzeichnet, dass**

der Schritt, die ermittelten charakteristischen Schlüsselpunkte (S.1, S.2, ...) wenigstens näherungsweise im dreidimensionalen Koordinatensystem zu positionieren, die Schritte umfasst, dass

- für jeden Schlüsselpunkt und für das oder für mindestens ein Bild, welches diesen Schlüsselpunkt (S.1, S.2, ...) zeigt, die Position und Orientierung der Kamera (IR) in dem Moment, in dem die Kamera (IR) dieses Bild erzeugt hat, ermittelt wird und
- jeder Schlüsselpunkt (S.1, S.2, ...) rechnerisch im Koordinatensystem auf die Kamera (IR) zu bewegt wird,

wobei die Strecke, über die der Schlüsselpunkt (S.1, S.2, ...) bewegt wird,
von der jeweiligen Entfernung zu mindestens einem im Bild benachbarten Schlüsselpunkt,
bevorzugt zu einer vorgegebenen Anzahl von im Bild benachbarten Schlüsselpunkten,
abhängt.

8. Verfahren nach einem der vorhergehenden Ansprüche,
**dadurch gekennzeichnet, dass**
der Schritt, um einen ermittelten Cluster (Cl.1, Cl.2) einen umhüllenden Körper (Qu.1, Qu.2) zu legen, die Schritte umfasst, dass

- probeweise als umhüllender Körper derjenige Polyeder, bevorzugt Quader (Qu.1, Qu.2), um den Cluster (Cl.1, Cl.2) gelegt wird, der

parallel zu den Achsen des dreidimensionalen Koordinatensystems ausgerichtet ist,
den Cluster (Cl.1, Cl.2) vollständig umhüllt und
bevorzugt die kleinstmöglichen Abmessungen aufweist,

- das Volumen des Clusters (Cl.1, Cl.2) und das Volumen des umhüllenden Polyeders (Qu.1, Qu.2) ermittelt werden und
- dann, wenn das Volumen des Clusters (Cl.1, Cl.2) im Verhältnis zum Volumen des Polyeders (Qu.1, Qu.2) größer als oder gleich einer vorgegebenen Anteils-Schranke ist, der umhüllende Polyeder (Qu.1, Qu.2) als der umhüllende Körper verwendet wird.

9. Verfahren nach Anspruch 8,
**dadurch gekennzeichnet, dass**

dann, wenn das Cluster-Volumen im Verhältnis zum Polyeder-Volumen kleiner als die Anteils-Schranke ist, die Schritte durchgeführt werden, dass

- zwei horizontale Ebenen dergestalt ermittelt werden, dass der Cluster (Cl.1, Cl.2) sich zwischen diesen beiden Ebenen befindet,
- durch jeweils eine Projektion senkrecht zu den beiden Ebenen der Cluster (Cl.1, Cl.2) in diese beiden parallelen horizontalen Ebenen projiziert wird, so dass zwei zweidimensionale Projektionsflächen erzeugt werden, welche parallel zueinander sind und die gleiche Gestalt aufweisen,
- jeweils ein Streckenzug um die beiden zweidimensionalen Projektionsflächen herum gelegt wird und
- als umhüllender Körper ein Körper verwendet wird, der von den beiden Projektionsflächen und von senkrechten Flächen zwischen diesen beiden Projektionsflächen begrenzt wird.

10. Anordnung zur automatischen Generierung eines Raumplans für eine Etage eines Gebäudes,

wobei die Anordnung

- eine Kamera (IR),
- einen Positionssensor (IMS) und
- eine Signalverarbeitungseinheit (SP)

umfasst,
wobei die Kamera (IR) dazu ausgestaltet ist, durch die Etage bewegt zu werden und beim Bewegt-Werden eine Abfolge von Bildern zu erzeugen,
wobei der Positionssensor (IMS) dazu ausgestaltet ist, für jedes Bild der Abfolge dann, wenn die Kamera (IR) dieses Bild erzeugt, die Position und Orientierung der Kamera (IR) zum Zeitpunkt der Bilderzeugung zu messen,
wobei ein dreidimensionales Koordinatensystem vorgegeben ist, bevorzugt ein kartesisches Koordinatensystem,
wobei die Signalverarbeitungseinheit (SP) dazu ausgestaltet ist, automatisch eine Menge von Voxeln (V1.1.1, ..., V.7.7.3, Vk.1, Vk.2, V.3, V.b, V.n) dergestalt zu erzeugen, dass jedes Voxel ein Polyeder, bevorzugt ein Quader, ist,
wobei die Kanten des Polyeders parallel zu den Achsen des dreidimensionalen Koordinatensystems sind,
wobei die Voxel zusammen die Etage umschließen, für die ein Raumplan erzeugt werden soll,
wobei die Signalverarbeitungseinheit (SP) weiterhin dazu ausgestaltet ist, automatisch
durch Auswertung von Bildern der Abfolge charakteristische Schlüsselpunkte (S.1, S.2, ...), die auf jeweils einer Wand /W) der Etage liegen, zu ermitteln und wenigstens näherungsweise im dreidimensionalen Koordinatensystem zu positionieren,
freie Voxel (Vk.1) zu ermitteln,
wobei ein freies Voxel mindestens einmal zwischen der bewegten Kamera (IR) und mindestens einem Schlüsselpunkt (S.1, S.2, ...) liegt, ohne dass sich eine Wand (W) zwischen der Kamera (IR) und dem Voxel (Vk.1) befindet,
mindestens ein Cluster (Cl.1, Cl.2) dergestalt zu generieren, dass

- der oder jeder generierte Cluster (Cl.1, Cl.2) eine topologisch zusammenhängende Menge von freien Voxel (Vk.1) bildet und
- jedes freie Voxel zu höchstens einem Cluster (Cl.1, Cl.2) gehört,

um jeden ermittelten Cluster (Cl.1, Cl.2) herum jeweils einen umhüllenden Körper (Qu.1, Qu.2) dergestalt zu legen, dass die umhüllenden Körper (Qu.1, Qu.2) sich nicht durchdringen, und
den Raumplan dergestalt zu erzeugen, dass jeder umhüllende Körper (Qu.1, Qu.2) Begrenzungen jeweils eines Raums (R.1, R.2) der Etage beschreibt,
wobei die Signalverarbeitungseinheit (SP) dazu ausgestaltet ist,
für die Ermittlung von freien Voxeln (Vk.1)

- die Positionen der Schlüsselpunkte (S.1, S.2, ...) und
- die gemessenen Positionen und Orientierungen der Kamera (IR)

zu verwenden.

**Geänderte Patentansprüche gemäss Regel 137(2) EPÜ.**

1. Verfahren zur automatischen Generierung eines Raumplans für eine Etage eines Gebäudes,

    wobei der Raumplan eine rechnerverfügbare Darstellung ist, die sich an eine Ausgabeeinheit übermitteln und visuell ausgeben lässt,
    wobei ein dreidimensionales kartesisches Koordinatensystem vorgegeben wird,
    wobei das Verfahren unter Verwendung einer Anordnung durchgeführt wird, die

       - eine Kamera (IR),
       - einen Positionssensor (IMS) und
       - eine Signalverarbeitungseinheit (SP)

    umfasst,
    wobei das Verfahren die von der Signalverarbeitungseinheit (SP) automatisch durchgeführten Schritte umfasst, dass rechnerisch
    eine Menge von Voxeln (V1.1.1, ..., V.7.7.3, Vk.1, Vk.2, V.3, V.b, V.n) dergestalt erzeugt wird, dass jedes Voxel ein Quader, ist,
    wobei die Kanten des Quaders parallel zu den Achsen des dreidimensionalen Koordinatensystems angeordnet sind,
    wobei die Voxel zusammen die Etage umschließen, für die ein Raumplan erzeugt werden soll,
    die Kamera (IR) durch die Etage bewegt wird und beim Bewegt-Werden eine Abfolge von Bildern erzeugt und
    der Positionssensor (IMS) für jedes Bild der Abfolge die jeweilige Position und Orientierung der Kamera (IR) zu dem Zeitpunkt, an dem die Kamera (IR) das Bild erzeugt, misst,
    **dadurch gekennzeichnet, dass**
    durch Auswertung von Bildern der Abfolge charakteristische Schlüsselpunkte (S.1, S.2, ...), die auf jeweils einer Wand (W) der Etage liegen,

       - ermittelt und
       - wenigstens näherungsweise im dreidimensionalen Koordinatensystem positioniert werden,

    freie Voxel (Vk.1) ermittelt werden, wobei ein freies Voxel (Vk.1) mindestens einmal zwischen der bewegten Kamera (IR) und einem Schlüsselpunkt (S.1, S.2, ...) liegt, ohne dass sich eine Wand (W) zwischen der Kamera (IR) und dem Voxel (Vk.1) befindet,
    wobei für die Ermittlung von freien Voxeln (Vk.1)

       - die Positionen der Schlüsselpunkte (S.1, S.2, ...) und
       - die gemessenen Positionen und Orientierungen der bewegten Kamera (IR)

    verwendet werden,
    mindestens ein Cluster (CI.1, CI.2) dergestalt generiert wird, dass

       - der oder jeder generierte Cluster (CI.1, CI.2) eine topologisch zusammenhängende Menge von freien Voxeln bildet und
       - jedes freie Voxel (Vk.1) zu höchstens einem Cluster (CI.1, CI.2) gehört, um jeden ermittelten Cluster (CI.1, CI.2) herum jeweils ein umhüllender Körper (Qu.1, Qu.2) dergestalt gelegt wird, dass die umhüllenden Körper (Qu.1, Qu.2) sich nicht durchdringen, und

    der Raumplan dergestalt erzeugt wird, dass jeder umhüllende Körper (Qu.1, Qu.2) Begrenzungen jeweils eines Raums (R.1, R.2) der Etage beschreibt.

2. Verfahren nach Anspruch 1,
    **dadurch gekennzeichnet, dass**

    der Schritt, einen Cluster (CI.1, CI.2) zu generieren, die Schritte umfasst, dass

       - ein freies Voxel (Vk.1) ausgewählt wird, das noch nicht zu einem Cluster gehört, und als erster Kandidat für einen neuen Cluster verwendet wird,

- geprüft wird, ob der erste Kandidat (Vk.1) ein Kern-Voxel ist oder nicht,
- dann, wenn der erste Kandidat (Vk.1) ein Kern-Voxel ist, der erste Kandidat (Vk.1) auch das erste Voxel des neuen Clusters (Cl.1, Cl.2) ist,
- mindestens ein weiteres freies Voxel als weiterer Kandidat ausgewählt wird,
- geprüft wird, ob der weitere Kandidat ein Kern-Voxel ist oder nicht, und
- die Generierung des Clusters (Cl.1, Cl.2) beendet wird, wenn ein vorgegebenes Abbruchkriterium erfüllt ist,

wobei ein Kandidat (Vk.1) dann ein Kern-Voxel ist, wenn

- der Kandidat (Vk.1) zu einer topologisch zusammenhängenden Menge von Voxeln gehört,
- das Innere dieser Menge ausschließlich aus freien Voxeln besteht und
- diese Menge ein vorgegebenes und von der Anzahl der Voxel der Menge abhängendes Kriterium erfüllt, insbesondere die Anzahl größer oder gleich einer vorgegebenen unteren Schranke ist,

wobei bei der Prüfung, ob ein Kandidat (Vk.1) ein Kern-Voxel ist oder nicht,

- probeweise die topologisch zusammenhängende Menge erzeugt wird und
- geprüft wird, ob die erzeugte Menge das Kriterium erfüllt,

wobei dann, wenn der weitere Kandidat ein Kern-Voxel ist,
der Cluster (Cl.1, Cl.2) um mindestens den weiteren Kandidaten,
bevorzugt um jedes freie Voxel der probeweise erzeugten topologisch zusammenhängenden Menge,
ergänzt wird und
wobei ein weiteres freie Voxel der erzeugten topologisch zusammenhängenden Menge als weiterer Kandidat ausgewählt wird.

3. Verfahren nach Anspruch 2,
   **dadurch gekennzeichnet, dass**

   die Prüfung, ob ein Kandidat (Vk.1) ein Kern-Voxel ist oder nicht, die Schritte umfasst, dass
   ein Quader (Ke.1) dergestalt um den Kandidaten (Vk.1) gelegt wird, dass

   - der Quader (Ke.1) aus einer vorgegebenen Anzahl von aneinander angrenzenden Voxeln besteht,
   - die Kanten des Quaders (Ke.1) parallel zu den Achsen des dreidimensionalen Koordinatensystems angeordnet sind und
   - der Kandidat (Vk.1) in einem Zentrum des Quaders (Ke.1) liegt, und

   die probeweise erzeugt topologisch zusammenhängende Menge so erzeugt wird, dass sie ausschließlich aus Voxeln des Quaders (Ke.1) besteht.

4. Verfahren nach Anspruch 3,
   **dadurch gekennzeichnet, dass**

   die Prüfung, ob ein Kandidat (Vk.1) ein Kern-Voxel ist oder nicht, die weiteren Schritte umfasst, dass
   der Quader (Ke.1) um den Kandidaten (Vk.1) durch eine vertikale Projektion dergestalt auf eine Ebene (Eb) projiziert wird, dass alle übereinander liegenden Voxel des Quaders (Ke.1) auf jeweils dasselbe n-Eck, bevorzugt ein Rechteck [P(Vk.1, P(V.b), P(V.n)] projiziert werden,
   jedes n-Eck [P(Vk.1, P(V.b), P(V.n)] abhängig von den übereinander liegenden Voxeln als freies n-Eck [P(Vk.1] oder als anderes n-Eck [(V.b), P(V.n)] klassifiziert wird,
   beim Schritt, probeweise die topologisch zusammenhängende Menge zu erzeugen,
   probeweise eine topologisch zusammenhängende Menge von n-Ecken [P(Vk.1, P(V.b), P(V.n)] erzeugt wird, wobei die n-Ecken [P(Vk.1, P(V.b), P(V.n)] der erzeugten Menge zu der Menge von n-Ecken gehören, die durch die Projektion des Quaders (Ke.1) auf die Ebene (Eb) erzeugt wurden, und
   der Kandidat (Vk.1) dann ein Kern-Voxel ist, wenn die erzeugte Menge von n-Ecken [P(Vk.1, P(V.b), P(V.n)] ein von der Anzahl der n-Ecken der Menge abhängendes Kriterium erfüllt,
   insbesondere die Anzahl größer oder gleich einer vorgegebenen Mindestanzahl ist.

5. Verfahren nach einem der Ansprüche 2 bis 4,

**dadurch gekennzeichnet, dass**

die topologisch zusammenhängende Menge schrittweise ausgehend von dem Kandidaten (Vk.1) oder von der Projektion des Kandidaten [P(Vk.1)] auf die Ebene (Eb) probeweise dergestalt erzeugt wird, dass im Inneren der topologisch zusammenhängenden Menge keine Lücke auftritt, also kein Voxel oder keine Projektion eines n-Ecks auf die Ebene (Eb) im Inneren der Menge nicht zur erzeugten Menge gehört.

6. Verfahren nach einem der vorhergehenden Ansprüche,
**dadurch gekennzeichnet, dass**

bei der Ermittlung von freien Voxeln für jedes Voxel (Vk.1) jede Strecke (St1, St2, St3) ermittelt wird, welche von der Kamera (IR) zu einem Schlüsselpunkt reicht und durch das Voxel verläuft, dann, wenn für ein Voxel (Vk.1, V.b, V.n) mindestens eine gegebene Mindestanzahl von solchen Strecken (St1, St2, St3) durch das Voxel ermittelt wird,

- eine Bewertung des Voxels (Vk.1, V.b, V.n) berechnet wird, wobei diese Bewertung von der Anzahl der Strecken, die durch das Voxel verlaufen, und / oder von der jeweiligen Positionen jeder Strecke durch das Voxel (Vk.1, V.b, V.n) relativ zu dem Mittelpunkt des Voxels (Vk.1, V.b, V.n) abhängt, und
- das Voxel (Vk.1, V.b, V.n) abhängig von der Bewertung als ein freies Voxel (Vk.1) oder als ein belegtes Voxel (V.b) klassifiziert wird, und

dann, wenn für ein Voxel (Vk.1, V.b, V.n) weniger als die Mindestanzahl von solchen Strecken ermittelt wurde, das Voxel als ein nicht klassifizierbares Voxel (V.n) bewertet wird.

7. Verfahren nach einem der vorhergehenden Ansprüche,
**dadurch gekennzeichnet, dass**

der Schritt, die ermittelten charakteristischen Schlüsselpunkte (S.1, S.2, ...) wenigstens näherungsweise im dreidimensionalen Koordinatensystem zu positionieren, die Schritte umfasst, dass

- für jeden Schlüsselpunkt und für das oder für mindestens ein Bild, welches diesen Schlüsselpunkt (S.1, S.2, ...) zeigt, die Position und Orientierung der Kamera (IR) in dem Moment, in dem die Kamera (IR) dieses Bild erzeugt hat, ermittelt wird und
- jeder Schlüsselpunkt (S.1, S.2, ...) rechnerisch im Koordinatensystem auf die Kamera (IR) zu bewegt wird,

wobei die Strecke, über die der Schlüsselpunkt (S.1, S.2, ...) bewegt wird, von der jeweiligen Entfernung zu mindestens einem im Bild benachbarten Schlüsselpunkt, bevorzugt zu einer vorgegebenen Anzahl von im Bild benachbarten Schlüsselpunkten, abhängt.

8. Verfahren nach einem der vorhergehenden Ansprüche,
**dadurch gekennzeichnet, dass**
der Schritt, um einen ermittelten Cluster (Cl.1, Cl.2) einen umhüllenden Körper (Qu.1, Qu.2) zu legen, die Schritte umfasst, dass

- probeweise als umhüllender Körper derjenige Quader (Qu.1, Qu.2), um den Cluster (Cl.1, Cl.2) gelegt wird, der

parallel zu den Achsen des dreidimensionalen Koordinatensystems ausgerichtet ist, den Cluster (Cl.1, Cl.2) vollständig umhüllt und bevorzugt die kleinstmöglichen Abmessungen aufweist,

- das Volumen des Clusters (Cl.1, Cl.2) und das Volumen des umhüllenden Quaders (Qu.1, Qu.2) ermittelt werden und
- dann, wenn das Volumen des Clusters (Cl.1, Cl.2) im Verhältnis zum Volumen des Quaders (Qu.1, Qu.2) größer als oder gleich einer vorgegebenen Anteils-Schranke ist, der umhüllende Quader (Qu.1, Qu.2) als der umhüllende Körper verwendet wird.

**9.** Verfahren nach Anspruch 8,
**dadurch gekennzeichnet, dass**
dann, wenn das Cluster-Volumen im Verhältnis zum Quader-Volumen kleiner als die Anteils-Schranke ist, die Schritte durchgeführt werden, dass

- zwei horizontale Ebenen dergestalt ermittelt werden, dass der Cluster (CI.1, CI.2) sich zwischen diesen beiden Ebenen befindet,
- durch jeweils eine Projektion senkrecht zu den beiden Ebenen der Cluster (CI.1, CI.2) in diese beiden parallelen horizontalen Ebenen projiziert wird, so dass zwei zweidimensionale Projektionsflächen erzeugt werden, welche parallel zueinander sind und die gleiche Gestalt aufweisen,
- jeweils ein Streckenzug um die beiden zweidimensionalen Projektionsflächen herum gelegt wird und
- als umhüllender Körper ein Körper verwendet wird, der von den beiden Projektionsflächen und von senkrechten Flächen zwischen diesen beiden Projektionsflächen begrenzt wird.

**10.** Anordnung zur automatischen Generierung eines Raumplans für eine Etage eines Gebäudes,

wobei der Raumplan eine rechnerverfügbare Darstellung ist, die sich an eine Ausgabeeinheit übermitteln und visuell ausgeben lässt,
wobei die Anordnung

- eine Kamera (IR),
- einen Positionssensor (IMS) und
- eine Signalverarbeitungseinheit (SP)

umfasst,
wobei die Kamera (IR) dazu ausgestaltet ist, durch die Etage bewegt zu werden und beim Bewegt-Werden eine Abfolge von Bildern zu erzeugen,
wobei der Positionssensor (IMS) dazu ausgestaltet ist, für jedes Bild der Abfolge dann, wenn die Kamera (IR) dieses Bild erzeugt, die jeweilige Position und Orientierung der Kamera (IR) zum Zeitpunkt der Bilderzeugung zu messen,
wobei ein dreidimensionales kartesisches Koordinatensystem vorgegeben ist,
wobei die Signalverarbeitungseinheit (SP) dazu ausgestaltet ist, automatisch eine Menge von Voxeln (V1.1.1, ..., V.7.7.3, Vk.1, Vk.2, V.3, V.b, V.n) dergestalt zu erzeugen, dass jedes Voxel ein Quader, ist,
wobei die Kanten des Quaders parallel zu den Achsen des dreidimensionalen Koordinatensystems sind und
wobei die Voxel zusammen die Etage umschließen, für die ein Raumplan erzeugt werden soll,
**dadurch gekennzeichnet, dass**
die Signalverarbeitungseinheit (SP) weiterhin dazu ausgestaltet ist, automatisch
durch Auswertung von Bildern der Abfolge charakteristische Schlüsselpunkte (S.1, S.2, ...), die auf jeweils einer Wand /W) der Etage liegen, zu ermitteln und wenigstens näherungsweise im dreidimensionalen Koordinatensystem zu positionieren,
freie Voxel (Vk.1) zu ermitteln,
wobei ein freies Voxel mindestens einmal zwischen der bewegten Kamera (IR) und mindestens einem Schlüsselpunkt (S.1, S.2, ...) liegt, ohne dass sich eine Wand (W) zwischen der Kamera (IR) und dem Voxel (Vk.1) befindet,
mindestens ein Cluster (CI.1, CI.2) dergestalt zu generieren, dass

- der oder jeder generierte Cluster (CI.1, CI.2) eine topologisch zusammenhängende Menge von freien Voxel (Vk.1) bildet und
- jedes freie Voxel zu höchstens einem Cluster (CI.1, CI.2) gehört,

um jeden ermittelten Cluster (CI.1, CI.2) herum jeweils einen umhüllenden Körper (Qu.1, Qu.2) dergestalt zu legen, dass die umhüllenden Körper (Qu.1, Qu.2) sich nicht durchdringen, und
den Raumplan dergestalt zu erzeugen, dass jeder umhüllende Körper (Qu.1, Qu.2) Begrenzungen jeweils eines Raums (R.1, R.2) der Etage beschreibt,
wobei die Signalverarbeitungseinheit (SP) dazu ausgestaltet ist,
für die Ermittlung von freien Voxeln (Vk.1)

- die Positionen der Schlüsselpunkte (S.1, S.2, ...) und

- die gemessenen Positionen und Orientierungen der Kamera (IR) zu verwenden.

**FIG. 1**

SP

IMS

R.x

W

Du

IR

S1.1

W

S1.2

S1.3

S1.4; S2.1

S1'

S1

F

S2'

S2.2

S2.3

S2.4

S2

S3

**FIG. 2**

FIG. 3

St2
S2'
F
W
St1 S1'
S1'
Vx
St3
Vy
S3'
IR

IMS
SP
R.x
Du
W

FIG. 4

EP 4 354 083 A1

FIG. 5

FIG. 6

FIG. 7

FIG. 8

FIG. 9

EP 4 354 083 A1

Zus.1

Zus.Fl

Tr

Zus.3

Zus.4

Zus.2

Zus.5

**FIG. 10**

FIG. 11

Zus.4

R.4

Zus.3

R.3

Zus.5

Tr

Zus.Fl

Fl

Zus.1

R.1

Zus.2

R.2

Europäisches
Patentamt

European
Patent Office

Office européen
des brevets

**EUROPÄISCHER RECHERCHENBERICHT**

**Nummer der Anmeldung**

**EP 23 20 2390**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2020/049112 A1 (3FROG NV [BE]) 12. März 2020 (2020-03-12) * Zusammenfassung * * Ansprüche 1,2,3,4,5 * * Absatz [0010] * | 1-10 | INV. G01C11/04 G06T9/00 G06V10/70 G06T7/49 G06T15/06 |
| A | US 2021/125397 A1 (MOULON PIERRE [US] ET AL) 29. April 2021 (2021-04-29) * Zusammenfassung * * Abbildungen 1A, 1B * * Seite 3; Anspruch 1 * | 1-10 | |
| A | US 2021/225081 A1 (TANG FENG [US] ET AL) 22. Juli 2021 (2021-07-22) * Zusammenfassung * * Abbildungen 4,5,6,8d * | 1-10 | |
| A | US 2022/003555 A1 (COLBURN ALEX [US] ET AL) 6. Januar 2022 (2022-01-06) * Zusammenfassung * * Absatz [0002] * | 1-10 | RECHERCHIERTE SACHGEBIETE (IPC) |
| A | US 2021/279950 A1 (PHALAK AMEYA PRAMOD [US]) 9. September 2021 (2021-09-09) * Zusammenfassung * * Seiten 1,2,3,4 * * Absätze [0305] - [0313] * | 1-10 | G01C G06T G06V |
| A | WO 2018/201019 A1 (GOOGLE LLC [US]) 1. November 2018 (2018-11-01) * Zusammenfassung * * Abbildung 5 * * Ansprüche 1,2 * | 1-10 | |

-/--

Der vorliegende Recherchenbericht wurde für alle Patentansprüche erstellt

| Recherchenort | Abschlußdatum der Recherche | Prüfer |
|---|---|---|
| Den Haag | 9. Februar 2024 | Stoffers, Christian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

**EP 23 20 2390**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | ARMIN HORNUNG ET AL: "OctoMap: an efficient probabilistic 3D mapping framework based on octrees", AUTONOMOUS ROBOTS, Bd. 34, Nr. 3, 7. Februar 2013 (2013-02-07), Seiten 189-206, XP055147395, ISSN: 0929-5593, DOI: 10.1007/s10514-012-9321-0 * Zusammenfassung * ----- | 1-10 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 9. Februar 2024 | Stoffers, Christian |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

..............................................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 23 20 2390

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-02-2024

| Im Recherchenbericht angeführtes Patentdokument | Datum der Veröffentlichung | Mitglied(er) der Patentfamilie | Datum der Veröffentlichung |
|---|---|---|---|
| WO 2020049112 A1 | 12-03-2020 | EP 3620941 A1 | 11-03-2020 |
| | | WO 2020049112 A1 | 12-03-2020 |
| US 2021125397 A1 | 29-04-2021 | CA 3097164 A1 | 28-04-2021 |
| | | US 2021125397 A1 | 29-04-2021 |
| | | US 2022028156 A1 | 27-01-2022 |
| US 2021225081 A1 | 22-07-2021 | EP 3876206 A2 | 08-09-2021 |
| | | EP 4235590 A2 | 30-08-2023 |
| | | US 2021225043 A1 | 22-07-2021 |
| | | US 2021225081 A1 | 22-07-2021 |
| | | US 2021225090 A1 | 22-07-2021 |
| | | US 2023075601 A1 | 09-03-2023 |
| US 2022003555 A1 | 06-01-2022 | CA 3058602 A1 | 11-04-2020 |
| | | US 2022003555 A1 | 06-01-2022 |
| US 2021279950 A1 | 09-09-2021 | CN 115516516 A | 23-12-2022 |
| | | EP 4115392 A1 | 11-01-2023 |
| | | JP 2023516674 A | 20-04-2023 |
| | | US 2021279950 A1 | 09-09-2021 |
| | | WO 2021178537 A1 | 10-09-2021 |
| WO 2018201019 A1 | 01-11-2018 | CN 110199322 A | 03-09-2019 |
| | | EP 3616164 A1 | 04-03-2020 |
| | | JP 6907325 B2 | 21-07-2021 |
| | | JP 2020518038 A | 18-06-2020 |
| | | KR 20190098201 A | 21-08-2019 |
| | | US 2018315162 A1 | 01-11-2018 |
| | | WO 2018201019 A1 | 01-11-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **J. SHI ; C. TOMASI.** Good Features to Track. IEEE, vol. 19/94, 1063-1069
- **A. HORNUNG ; K. M. WURM ; M. BENNEWITZ ; C. STACHNISS ; W. BURGARD.** OctoMap: An efficient probabilistic 3D mapping framework based on octrees. *Autonomous Robots,* 2013, vol. 34 (3), 189-206
- **M. ESTER ; H. P. KRIEGEL ; J. SANDER ; X. XU.** A density-based algorithm for discovering clusters in large spatial databases with noise. *kdd,* 1996, vol. 96 (34), 226-231